# EUROPEAN PATENT SPECIFICATION

(11) **EP 2 507 639 B1**
(45) Date of publication and mention of the grant of the patent: **01.04.2020**
(21) Application number: 10834985.3
(22) Date of filing: 29.11.2010
(51) Int. Cl.: G01N 15/14, G01N 35/08, G01N 33/483, G01N 21/45

(54) **APPARATUSES, SYSTEMS, METHODS, AND COMPUTER READABLE MEDIA FOR ACOUSTIC FLOW CYTOMETRY**
VORRICHTUNGEN, SYSTEM, VERFAHREN UND COMPUTERLESBARE MEDIEN FÜR AKUSTISCHE FLUSSZYTOMETRIE
APPAREILS, SYSTÈMES, PROCÉDÉS ET SUPPORTS LISIBLES PAR ORDINATEUR DESTINÉS À LA CYTOMÉTRIE DE FLUX ACOUSTIQUE

(30) Priority: 04.12.2009 US 266907 P; 12.02.2010 US 303938 P; 28.06.2010 US 359310 P
(43) Date of publication of application: 10.10.2012
(73) Proprietor: Life Technologies Corporation, Minneapolis, Minnesota 55402 (US)
(72) Inventor: KADUCHAK, Gregory, Eugene Oregon 97405 (US); WARD, Michael Dennis, Eugene Oregon 97405 (US); BRADFORD, Jolene Ann, Eugene Oregon 97405 (US); PARKER, Andrew Thomas George, Mission Viejo California 92691 (US)
(74) Representative: Ziermann, Oliver
(86) International application number: PCT/US2010/058242
(87) International publication number: WO 2011/068764

(56) References cited:
- JP-A- H0 277 636
- US-A- 4 896 961
- US-A1- 2004 062 685
- US-A1- 2009 048 805
- US-A1- 2009 048 805
- US-A1- 2009 158 823
- US-A1- 2009 178 716
- US-A1- 2009 178 716
- US-A1- 2010 009 333

## Description

### CROSS-REFERENCE TO RELATED APPLICATIONS

This application claims priority to U.S. provisional application no. 61/266,907, filed December 4, 2009, U.S. provisional application no. 61/303,938, filed February 12, 2010, and U.S. provisional application no. 61/359,310, filed June 28, 2010.

### BACKGROUND

### Field:

This application generally relates to flow cytometry and, more specifically, to apparatuses, systems, methods, and computer readable media for detecting rare events using acoustic flow cytometry.

### Background:

In traditional flow cytometry, a sample fluid is focused to a small core diameter of around 10-50 µη 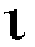 by flowing a sheath fluid around the sample fluid at a very high volumetric rate (about 100-1000 times the volumetric rate of the sample fluid). The particles in the sample fluid flow at very fast linear velocities (on the order of meters per second) and as a result spend only a very short time passing through an interrogation point (often only 1-10 µβ). This has significant disadvantages. First, the particles cannot be redirected to the interrogation point because flow cannot be reversed. Second, the particles cannot be held at the interrogation point because focusing is lost without the sheath fluid. Third, the short transit time limits sensitivity and resolution, which renders rare event detection difficult and time-consuming.

Previous attempts at addressing these disadvantages have been unsatisfactory. The concentration of the particles in the sample fluid may be increased to compensate for some of these disadvantages, but this may not always be possible and may be costly. Also, the photon flux at the interrogation point may be increased to extract more signal, but this may often photobleach (i.e., excite to non-radiative states) the fluorophores used to generate the signal and may increase background Rayleigh scatter, Raman scatter, and fluorescence. Thus, there is a need for new apparatuses, systems, methods, and computer readable media for flow cytometry that allow high-throughput analysis of particles and fast and efficient rare event detection while avoiding or minimizing one or more of these disadvantages.

US2009/178716 A1 describes a method and apparatus for acoustic focusing hardware and implementations. The apparatus hydrodynamically and acoustically focuses particles in a particle stream.

US2009/048805 A1 describes methods and systems that use acoustic radiation pressure. The method includes acoustically focusing a population of particles within a flow cell to concentrate a population of particles.

### SUMMARY

In accordance with the principles embodied in this application, new apparatuses, systems, methods, and computer readable media for flow cytometry that allow high-throughput analysis of particles and fast and efficient rare event detection while avoiding or minimizing one or more of the above disadvantages are provided.

According to embodiments of the present invention, there is provided a flow cytometer according to claim 1 and a method for detecting a rare event using a flow cytometer according to claim 10.

Additional details of these and other embodiments of the invention are set forth in the accompanying drawings and the following description, which are exemplary and explanatory only and are not in any way limiting of the present invention. Other embodiments, features, objects, and advantages of the present invention will be apparent from the description and drawings, and from the claims.

### BRIEF DESCRIPTION OF THE DRAWINGS

The accompanying drawings, which are incorporated into and form a part of the specification, illustrate one or more embodiments of the present invention and, together with the description, serve to explain the principles of various embodiments of the present invention. The drawings are exemplary and explanatory only and are not to be construed as limiting or restrictive of the present invention in any way.
FIG. 1 illustrates a comparison of planar and line-driven capillary focusing.
FIGS. 2A and 2B illustrate a line-driven acoustic focusing apparatus.
FIG. 3 illustrates acoustically focused particles flowing across laminar flow lines in a line-driven acoustic focusing apparatus.
FIGS. 4A and 4B illustrate acoustically reoriented laminar flow streams in an acoustic focusing apparatus.
FIGS. 5A-5C illustrate the separation of micron-sized polystyrene fluorescent orange/red particles from a background of nanometer-sized green particles in an acoustic focusing apparatus. FIG. 5D illustrates acoustically focused particles flowing across laminar flow lines in an acoustic focusing apparatus.
FIGS. 6A-6C illustrate acoustic separation of particles across laminar flow boundaries.
FIGS. 7A-7C illustrate several acoustic focusing apparatuses.
FIG. 8 illustrates a schematic of an acoustical focusing flow cell in combination with an acoustic flow cytometer.
FIG. 9 illustrates a flow diagram of an acoustic focusing system.
FIG. 10 illustrates the diagram in FIG. 9 modified to include in-line laminar washing.
FIG. 11 illustrates acoustic focusing of a laminar wash fluid.
FIG. 12 illustrates a schematic of a parallel fluid acoustic switching apparatus.
FIGS. 13A and 13B illustrate schematics of switching of unlysed whole blood.
FIG. 14 illustrates a schematic of an acoustic stream switching particle counting device.
FIG. 15 illustrates the separation of negative contrast carrier particles from a blood sample core.
FIG. 16 illustrates multiplexed immunoassaying in an acoustic wash system.
FIG. 17 illustrates a flow chart for high-throughput screening using acoustic focusing.
FIG. 18 illustrates a two-chamber culturing/harvesting vessel using acoustic washing.
FIGS. 19A-19C illustrate aptamer selection from a library.
FIG. 20 illustrates a dual-stage acoustic valve sorter.
FIGS. 21A and 2 IB illustrate the optical analysis of acoustically repositioned particles and a medium.
FIG. 22 illustrates a diagram of particle groupings with different parameters.
FIG. 23 illustrates acoustically repositioned particles imaged by an imager.
FIG. 24 illustrates acoustic fusion of particles.
FIG. 25 illustrates acoustic focusing and separation of particles.
FIGS. 26A-26F illustrate comparative output plots for fluorescent microspheres run on a non-acoustic flow cytometer and on an acoustic focusing cytometer using various lasers and sensitivity settings.
FIGS. 27A and 27B are histogram plots illustrating the effect in cell cycle analysis of an 8-fold increase in transit time associated with acoustic cytometry.
FIG. 28A is a photograph of blood having cells acoustically concentrated to form a rope-like structure flowing in an acoustic cytometer. FIG. 28B is a photograph of more diluted blood with cells acoustically concentrated in a single file line in an acoustic cytometer.
FIG. 29 is a spectral graph showing the excitation and emission spectra of the violet excited fluorophore Pacific Blue™.
FIG. 30 illustrates the detection of a rare event population of 0.07% CD34 positive cells as a subpopulation of the live CD45 positive cells.
FIGS. 31A and 31B respectively show plots of FSC vs. SSC for lysed whole blood in an acoustic focusing system and in a solely hydrodynamic focusing system.
FIGS. 32A and 32B show plots of FSC vs. SSC for Jurkat cells obtained using the same systems and parameters as in FIGS. 31A and 3 IB.
FIG. 33 illustrates a schematic diagram of an acoustic flow cytometry system.
FIG. 34 illustrates a schematic diagram of an acoustic focusing capillary in an acoustic flow cytometer.
FIG. 35 illustrates a portion of an optical collection block in an acoustic flow cytometer.
FIG. 36 illustrates a schematic diagram of an optical data collection block in an acoustic flow cytometer.
FIG. 37 illustrates a schematic diagram of a fluidics system in an acoustic flow cytometer.
FIG. 38 illustrates a schematic diagram of a single transducer acoustic focusing capillary with downstream hydrodynamic focusing.
FIG. 39 illustrates a schematic diagram of a blocker bar apparatus that may adjust a forward scatter aperture in an acoustic flow cytometer.
FIGS. 40A-40F illustrate the detection of rare event populations of 0.050% and 0.045% CD34 positive cells as a subpopulation of live CD45 positive cells.
FIGS. 41A-41D illustrate comparative output plots for cell detection run on a non-acoustic flow cytometer and on an acoustic focusing cytometer.
FIG. 42 illustrates a schematic of components of an acoustic focusing cytometer.

Like symbols in the drawings indicate like elements.

### EXEMPLARY EMBODIMENTS

As used herein, "acoustic contrast" means the relative difference in material properties of two objects with regard to the ability to manipulate their positions with acoustic radiation pressure, and may include, for example, differences in density and compressibility; "assaying" means a method for interrogating one or more particles or one or more fluids; "assay" means a product, including, for example, an assay kit, data and/or report; "flow cell" means a channel, chamber, or capillary having an interior shape selected from rectangular, square, elliptical, oblate circular, round, octagonal, heptagonal, hexagonal, pentagonal, and trigonal; and "channel" means a course, pathway, or conduit with at least an inlet and preferably an outlet that can contain an amount of fluid having an interior shape selected from rectangular, square, elliptical, oblate circular, round, octagonal, heptagonal, hexagonal, pentagonal, and trigonal.

As used herein, "acoustically focusing", "acoustically focused", "acoustically focuses", and "acoustic focusing" means the act of positioning particles within a flow cell by means of an acoustic field. An example of acoustic focusing of particles is the alignment of particles along an axis of a channel. The spatial extent of the focal region where particles are localized may be determined by the flow cell geometry, acoustic field, and acoustic contrast. As viewed in the cross-sectional plane of a flow cell, the shape of an observed focal region may resemble a regular geometric shape (e.g., point, line, arc, ellipse, etc.) or it may be arbitrary. The primary force used to position the objects is acoustic radiation pressure.

As used herein, "acoustically reorienting" and "acoustically reorients" means the act of repositioning the location of miscible, partially miscible, or immiscible laminar flow streams of fluid or medium within a device with acoustic radiation pressure. This technique utilizes differences in the mechanical properties (acoustic contrast) of separate laminar streams in a flow channel. When two fluids are brought into contact, a large concentration gradient can exist due to differences in their molecular make-ups, resulting in an interfacial density and/or compressibility gradient (acoustic contrast between streams). Under the action of an acoustic field, the streams may be reoriented within a flow cell based upon their acoustic contrast.

As used herein, "particle" means a small unit of matter, including, for example, biological cells, such as, eukaryotic and prokaryotic cells, archaea, bacteria, mold, plant cells, yeast, protozoa, ameba, protists, animal cells; cell organelles; organic/inorganic elements or molecules; microspheres; and droplets of immiscible fluid such as oil in water.

As used herein, "analyte" means a substance or material to be analyzed; "probe" means a substance that is labeled or otherwise marked and used to detect or identify another substance in a fluid or sample; "target" means a binding portion of a probe; and "reagent" means a substance known to react in a specific way.

As used herein, "microsphere" or "bead" means a particle having acoustic contrast that can be symmetric as in a sphere, asymmetric as in a dumbbell shape or a macromolecule having no symmetry. Examples of microspheres or beads include, for example, silica, glass and hollow glass, latex, silicone rubbers, polymers such as polystyrene, polymethylmethacrylate, polymethylenemelamine, polyacrylonitrile, polymethylacrylonitrile, poly(vinilidene chloride-co-acrylonitrile), and polylactide.

As used herein, "label" means an identifiable substance, such as a dye or a radioactive isotope that is introduced in a system, such as a biological system, and can be followed through the course of a flow cell or channel, providing information on the particles or targets in the flow cell or channel; and "signaling molecule" means an identifiable substance, such as a dye or a radioactive isotope that is introduced in a system, such as a biological system, and can be used as a signal for particles.

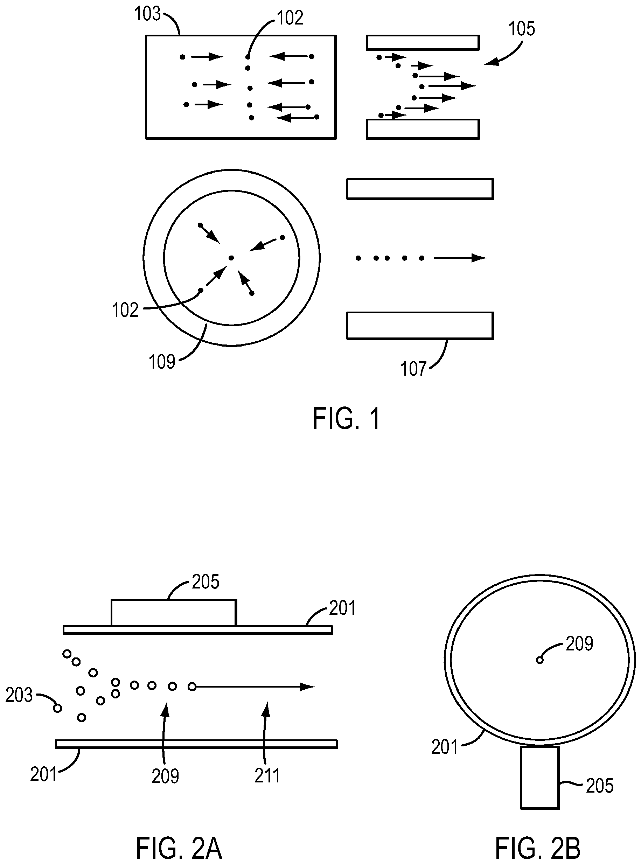

FIG. 1 illustrates a comparison of planar and line-driven capillary focusing according to an example not falling under the scope of the present invention. In planar focusing 103/105, the particles 102, which may include one or more rare event particles, may be focused as a two-dimensional sheet and have varying velocities (see different arrows) along the flow direction. In line-driven capillary focusing 107/109, the particles 102 may be focused to the center axis of the capillary and have a common velocity along the flow. The capillary may have a round, oblate, or elliptical cross-section, for example. Alternatively, the particles 102 may also be focused to another axis within the capillary, or along the walls of the capillary.

FIGS. 2A and 2B illustrate side and axial views of a line-driven acoustic focusing apparatus according to an example not falling under the scope of the present invention. The particles 203, which may include one or more rare event particles, may be acoustically focused using a transducer 205 to a pressure minimum in the center 209 of a tube 201, which may be cylindrical, for example. The particles 203 may form a single line trajectory 21 1, which may allow uniform residence time for particles with similar size and acoustic contrast, which may in turn allow high-throughput serial analysis of particles without compromising sensitivity and resolution.

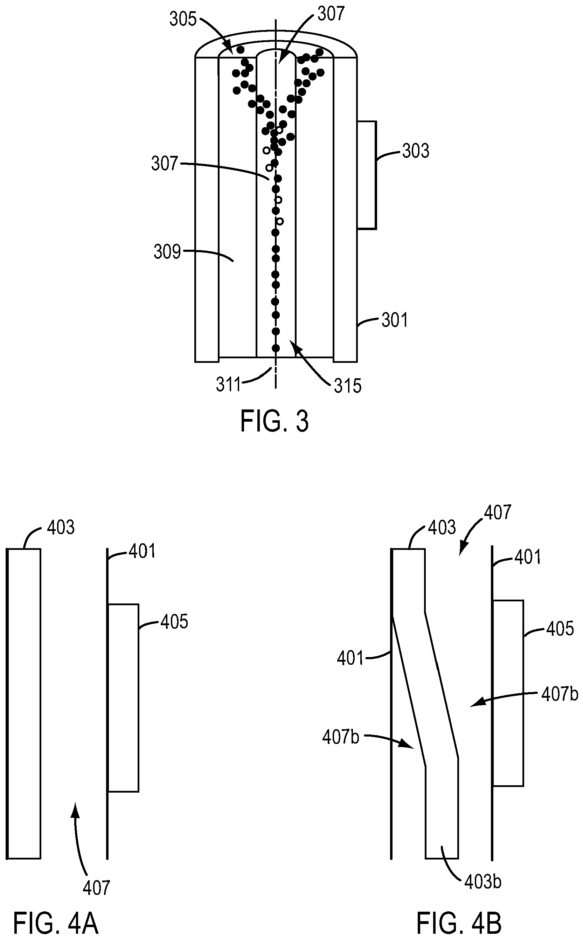

FIG. 3 illustrates acoustically focused particles flowing across laminar flow lines in a line-driven acoustic focusing apparatus according to an example not falling under the scope of the present invention. The particles 305, which may include one or more rare event particles, may be acoustically focused using transducer 303 from sample stream 309 to the center 307 of a flowing fluid/wash stream 315 in a line-driven capillary 301. The particles 305 may move across laminar flow lines and may then move as a single file line and be analyzed at analysis point 311.

FIGS. 4A and 4B illustrate acoustically reoriented laminar flow streams in an acoustic focusing apparatus according to an example not falling under the scope of the present invention. In FIG. 4A, there is no acoustic field and the laminar flow streams 403 and 407 flow parallel to one another in an acoustically driven capillary 401. In FIG. 4B, an acoustic field is applied by the transducer 405 and, as a result, the streams 403 and 407 are acoustically reoriented based upon their acoustic contrasts. The stream with greater acoustic contrast 403b may be reoriented to the center of the capillary 401, while the stream with lower acoustic contrast 407b may be reoriented near the walls of the capillary 401. If the acoustic field is activated in a dipole mode, for example, the stream 403b moves coincident with the central axis of the capillary 401, partially displacing the stream 407b, as illustrated in FIG. 4B. The streams may be immiscible, partially-miscible, or miscible. A large concentration gradient may exist between the streams due to their different molecular make-ups. For purposes of acoustic pressure, the concentration gradient may be viewed as a density and/or compressibility gradient, and the streams may be viewed as isolated entities with different densities and compressibilities (acoustic contrast) that can be acted upon with acoustic radiation pressure.

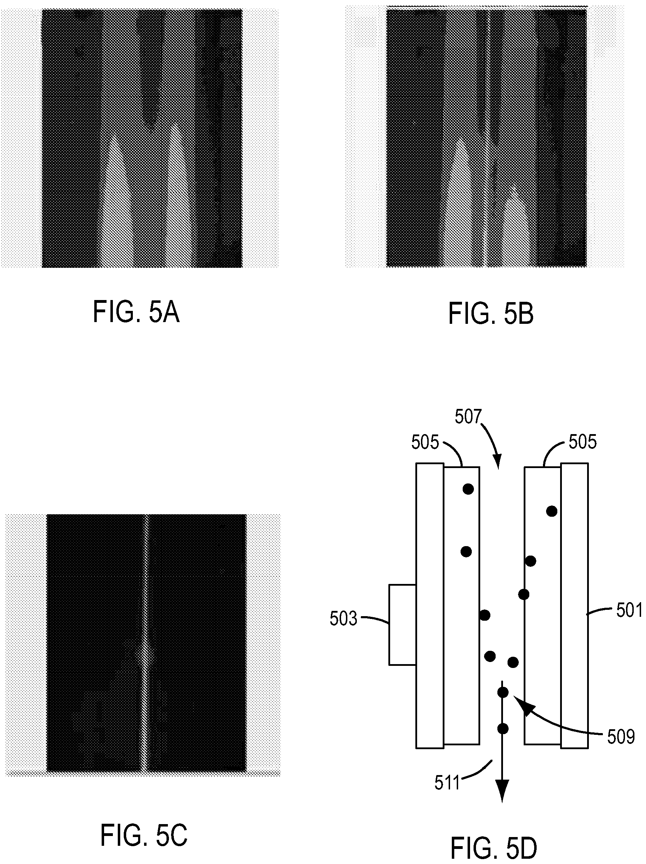

FIGS. 5A-5C illustrate the separation of micron-sized polystyrene fluorescent orange/red particles from a background of nanometer-sized green particles in an acoustic focusing apparatus according to an example not falling under the scope of the present invention. FIG. 5D illustrates acoustically focused particles flowing across laminar flow lines in an acoustic focusing apparatus according to an alternative embodiment to the present invention. Separation may be based both on size and acoustic contrast because the time-averaged acoustic force scales with the volume of a particle. If a center wash stream has higher specific gravity and/or lower compressibility than an outer sample stream, the particles initially in the outer sample stream with greater acoustic contrast than the central wash stream will continue to focus to the capillary axis while the particles of lesser contrast will be excluded. FIG. 5A shows red 5.7 µη 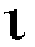 particles mixed with green 200 nm particles flowing through a capillary under epi-fluorescent illumination when the acoustic field is off. FIG. 5B shows that the 5.7 µη 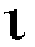 particles (which fluoresce yellow under blue illumination) are acoustically focused to a central line when the acoustic field is on, while the 200 nm particles remain in their original stream. FIG. 5C shows that the 5.7 µη 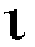 particles fluoresce red under green illumination with a red band-pass filter, while the 200 nm particles are not excited. FIG. 5D illustrates a clean core stream 507 introduced alongside a coaxial stream 505 containing a fluorescent background fluid flowing in capillary 501. As a transducer 503 produces an acoustic standing wave (not shown), the particles 509, which may include one or more rare event particles, are acoustically focused and move from the coaxial stream 505 to the core stream 507, where they flow in single file toward analysis point 511.

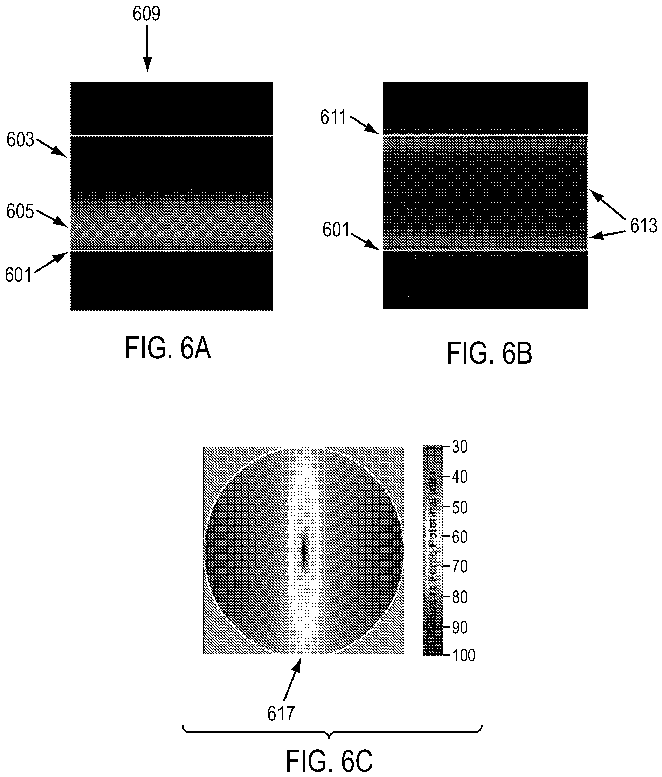

FIGS. 6A-6C illustrate acoustic separation of particles across laminar flow boundaries according to an example not falling under the scope of the present invention. A medium or fluid may be acoustically reoriented at the same time as particles in the medium or fluid, which may include one or more rare event particles, may be acoustically manipulated or focused. FIG. 6A shows a fluorescence image of an optical cell coupled to the end of a 250 µm acoustic focusing cell 609 when the acoustic field is off. White lines 601 and 611 indicate the edges of the flow cell. A mixture of 10% whole blood in PBS buffer spiked with 25 µg/ml of R-Phycoerythrin fluorescent protein (orange fluorescence) flows through the bottom half 605 of the flow cell (the white blood cell DNA is stained with SYTOX® Green); at the top half 603 is 6% iodixanol in PBS buffer (dark). FIG. 6B shows that when the acoustic field is on, the 6% iodixanol in PBS buffer is acoustically reoriented to the center 613, the blood/PBS buffer/R-Phycoerythrin mixture is acoustically reoriented toward the sides of the cell (top and bottom in the figure), and the white blood cells leave their original medium and are acoustically focused to the center where they appear as a green line (the red blood cells are similarly acoustically focused but are not visible in the fluorescent image). FIG. 6C illustrates a MATLAB plot 617 of the approximate acoustic force potential for particles that are more dense/less compressible than the background. More dense, less compressible particles/media (e.g., cells and iodixanol/PBS buffer) are acoustically focused/acoustically reoriented toward the center (dark blue region, potential minimum), whereas less dense and/or more compressible media (e.g., blood/PBS buffer/R-Phycoerythrin mixture) are acoustically focused/acoustically reoriented toward the left and right sides (dark red regions, potential maxima). If a sample stream of lower density (and/or higher compressibility) is flowed along the axial center of a substantially cylindrical capillary and a stream of higher density (and/or lower compressibility) is flowed adjacent to it, the streams will be acoustically reoriented to comply with the potential shown in FIG. 6C, a feature that has not been demonstrated or reported in planar systems.

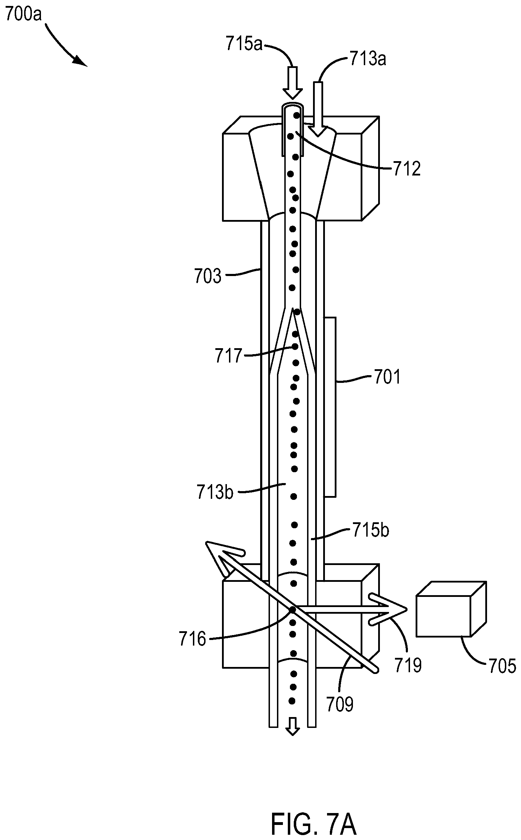

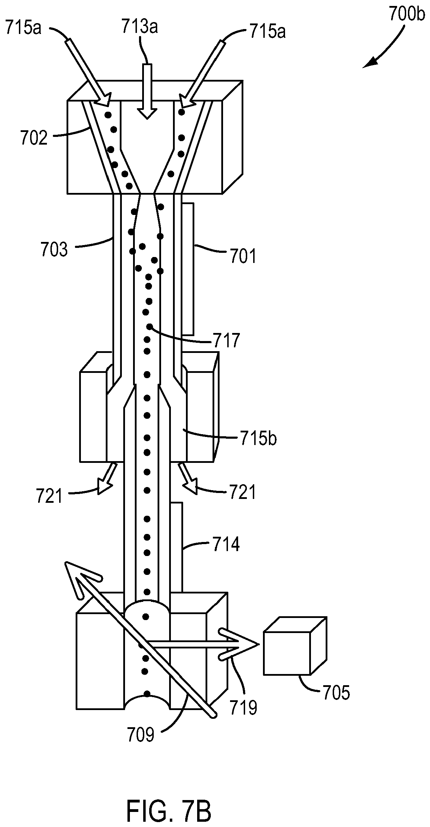

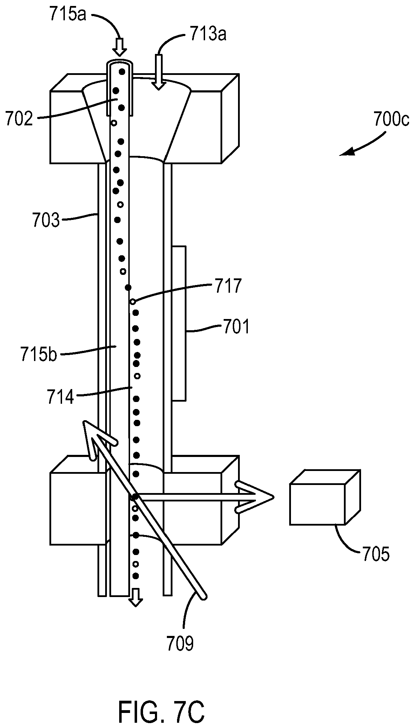

FIGS. 7A-7C illustrate acoustic focusing apparatuses according to an example not falling under the scope of the present invention. FIG. 7A shows a flow cytometry system 700a in which a sample 715a including particles 712, which may include one or more rare event particles, and a wash buffer 713a are introduced in a capillary 703. A line drive 701 (e.g., a PZT drive, or other means capable of producing an acoustic standing wave) introduces an acoustic standing wave (not shown) at a user-defined mode (e.g., a dipole mode). As a result, the sample 715a and wash buffer 713a may be acoustically reoriented (as 715b and 713b) and the particles 712 may be acoustically focused (as 717) based upon their acoustic contrast. An illumination source 709 (e.g., a laser or a group of lasers, or any suitable illumination source, such as a light emitting diode) illuminates the particles 717 at an interrogation point 716. The illumination source may be a violet laser (e.g., a 405 nm laser), a blue laser (e.g., a 488 nm laser), a red laser (e.g., a 640 nm laser), or a combination thereof. An optical signal 719 from the interrogated sample may be detected by a detector or array of detectors 705 (e.g., a PMT array, a photo-multiplier tube, avalanche photodiodes (APDs), a multi-pixel APD device, silicon PMTs, etc.). FIG. 7B shows a flow cytometry system 700b where the clean stream 713a may be flowed independently through the optics cell. The particles 702, which may include one or more rare event particles, may be acoustically focused to flow as line 717, the sample buffer 715b may be discarded to waste 721, and line 717 may transit to a second acoustic wave inducing means 714. FIG. 7C shows a flow cytometry system 700c where the sample 715a is injected slightly to one side of the center and flows next to capillary wall 703 while buffer 713a flows against the opposite wall. The transducer 701 may acoustically reorient sample 715a (as 715b), may acoustically focus particles 702, which may include one or more rare event particles, (as 714/717), and may acoustically reorient buffer 713a.

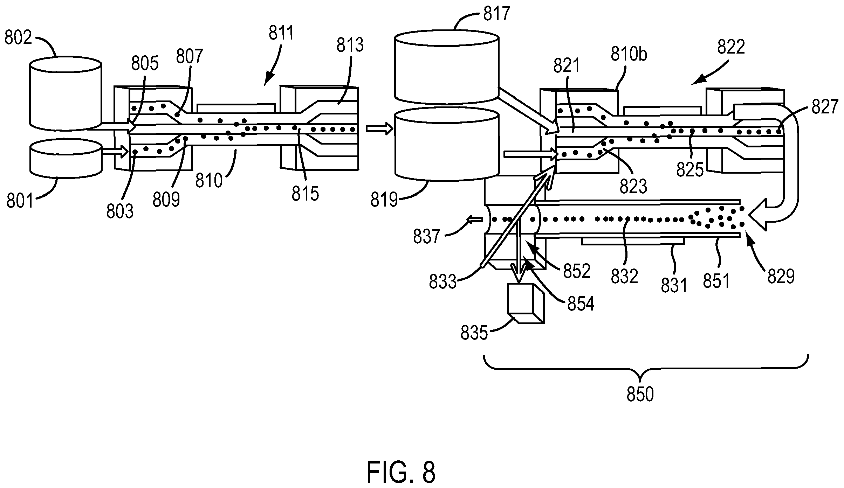

FIG. 8 illustrates a schematic of an acoustical focusing flow cell in combination with an acoustic flow cytometer for acoustically orienting particles and flow streams according to an example not falling under the scope of the present invention. The sample 801 including particles 803, 807, and 809, which may include one or more rare event particles, is introduced to a flow cell 810 containing a transducer 811, which acoustically focuses particles 803, 807, and 809 as particles 815 that are collected at collection/incubation site 819. A wash or other reagent 805 from wash container 802 is introduced in flow cell 810 as background stream 813, which exits laterally. Another wash stream 821 is introduced from wash container 817 into a flow cell 810b of a focus cytometer 850 having an acoustic field generator 822, which acoustically focuses particles 823 as particles 825/827 before entry at 829 into another flow cell 851. A transducer 831 further acoustically focuses the particles 825/827 as particles 832 before interrogation at interrogation point 852 by interrogation light 833. A signal 854 from the interrogated particles is sent to detector 835 for analysis before collection of the interrogated particles at collection point 837.

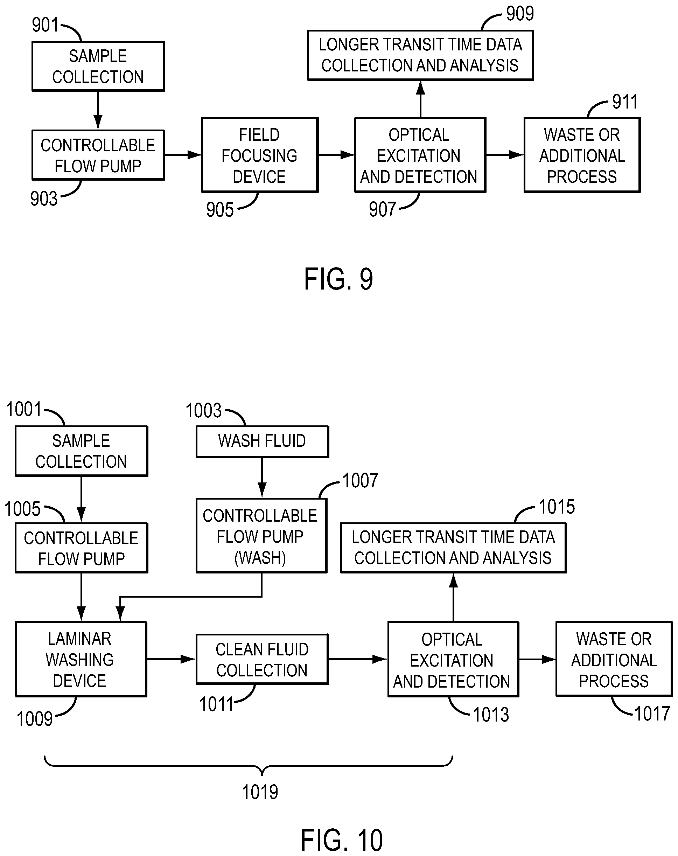

FIG. 9 illustrates a flow diagram of an acoustic focusing system according to an example not falling under the scope of the present invention. In step 901, a sample including particles is collected and directed to a controllable flow pump. In step 903, the controllable flow pump pumps the sample into an acoustic focusing device. In step 905, the acoustic focusing device focuses at least some of the particles, which may include one or more rare event particles, into a line or plane, and the particles are then directed to an interrogation zone for optical excitation and detection. In step 907, at least some of the particles are optically excited and at least some signal from the excited particles is detected, and the particles are then either directed to further analysis or to waste or some other processing. In step 909, the particles may be further analyzed by a longer transit time data collection and analysis section. In step 911, the particles may be extracted as waste or subjected to additional processing by a waste or additional processing section. The controllable pump may be adjusted to a desired particle flow rate for a desired linear velocity of the particles, which may be in the range of about 0 m/s to 10 m/s, of about 0 m/s to about 0.3 m/s, or of about 0.3 m/s to about 3 m/s, for example. The excitation/detection may be pulsed or modulated, and may be done using any suitable excitation/detection methods known in analog/digital electronics and/or optics, including using a Rayleigh scatter detector.

The control of particle velocity has many advantages. First, it may improve the signal by increasing the number of photons given off by a fluorescent/luminescent label, as the label may be illuminated for a longer time period. At a linear velocity of 0.3 m/s, the number of photons may increase by about 10-fold and about 3,000 particles per second may then be analyzed when using acoustic focusing (assuming an average distance between particle centers of 100 microns). And at a linear velocity of 0.03 m/s, that number may increase by about 100-fold and 300 particles per second may be analyzed. Second, markers that are not typically used because of the fast transit times in traditional flow cytometry (e.g., lanthanides, lanthanide chelates, nanoparticles using europium, semiconductor nanocrystals (e.g., quantum dots), absorptive dyes such as cytological stains and Trypan Blue, etc.) may become usable. Third, other markers (e.g., fluorophores or luminophores that have long lifetimes and/or low quantum yields/extinction coefficients; most chemi-bioluminescent species; labels with life times greater than about 10 ns, between about 10 ns to about 1 µβ, between about 1 to about 10 µβ, between about 10 to about 100 µβ, and between about 100 µβ to about 1 ms) may benefit from lower laser power that reduces photobleaching and from the longer transit times made possible by the control of linear velocity. Pulsing at a rate of a thousand times per second with a 10 µβ pulse may, for a transit time of 10 ms for example, allow 10 cycles of excitation and luminescence collection in which virtually all of the luminescence decay of a europium chelate, for example, could be monitored. At this pulse rate without the benefit of longer transit times made possible by the control of linear velocity afforded by embodiments of the present invention, 90% or more of the particles might pass without ever being interrogated. If the pulse rate were increased to 100 kHz with a 1 µβ pulse, there may still be nearly 9 µβ in which to monitor a lanthanide luminescence (as most fluorophores have 1-2 ns lifetimes and most autofluorescence decays within 10 ns).

FIG. 10 illustrates the diagram in FIG. 9 modified to include in-line laminar washing according to an example not falling under the scope of the present invention. In step 1001, a sample including particles is collected and directed to a controllable sample flow pump. In step 1005, the controllable sample flow pump pumps the sample into the laminar washing device part of an acoustic device 1019 (which may be based on acoustic focusing and/or reorientation of particles and fluids). Meanwhile, in step 1003, a wash fluid is collected and directed to a controllable wash fluid pump. In step 1007, the controllable wash fluid pump pumps the wash fluid into the laminar washing device. In step 1009, the laminar washing device washes the sample/particles in-line. In step 101 1, clean fluid is collected, and the washed sample/particles, which may include one or more rare event particles, are then directed to an interrogation zone for optical excitation and detection. In step 1013, at least some of the particles are optically excited and at least some signal from the excited particles is detected, and the particles are then either directed to further analysis or to waste or some other processing. In step 1015, the particles may be further analyzed by a longer transit time data collection and analysis section. In step 1017, the particles may be extracted as waste or subjected to additional processing by a waste or additional processing section.

FIG. 1 1 illustrates acoustic focusing of a laminar wash fluid according to an example not falling under the scope of the present invention. There, a sample containing particles 1109, which may include one or more rare event particles, is introduced in a planar acoustic flow cell 1 101 along with a laminar wash fluid 1107. A transducer 1 103 generates an acoustic wave 1105 that acoustically focuses the particles 1109 to a trajectory passing through node 1 111 based on acoustic contrast. The planar acoustic flow cell 1 101 may also have an acoustic node located externally, in which case particles 1 109 may be acoustically focused to the top of the flow cell.

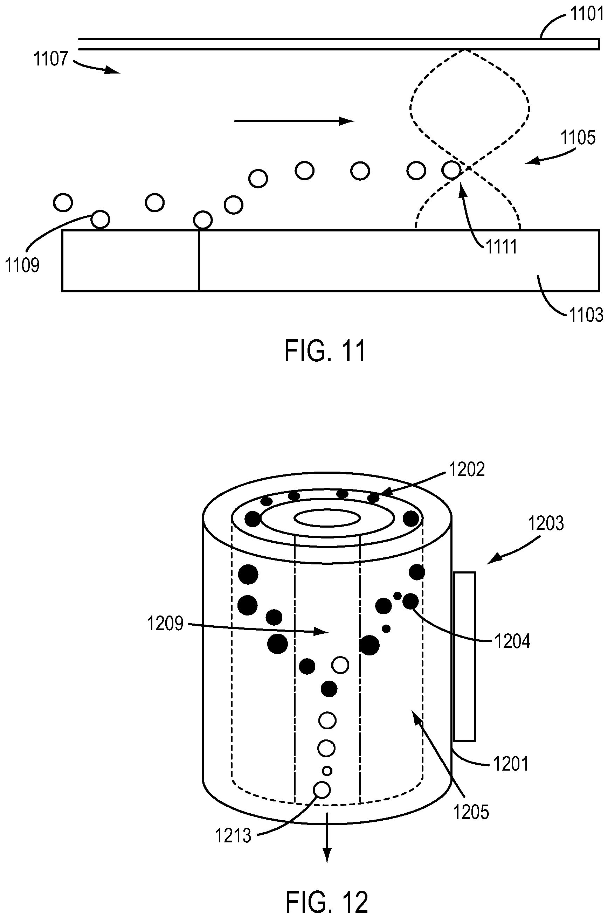

FIG. 12 illustrates a schematic of a parallel fluid acoustic switching apparatus according to an example not falling under the scope of the present invention. There, a first, outermost sample medium 1205 containing first and second particles 1202 and 1204, which may include one or more rare event particles, is introduced in capillary 1201. A second, intermediate medium 1213 along with a third, innermost medium 1209 are introduced in capillary 1201. A line drive 1203 may acoustically reorient the first, second, and third media and may acoustically focus the first and second particles based on their acoustic contrasts. The particles may then flow out of the capillary. Upon switching, some of the particles may be acoustically focused from the first medium to the third medium, passing through the second medium (which may be a reagent stream), or they may be acoustically focused from the second medium to the third medium.

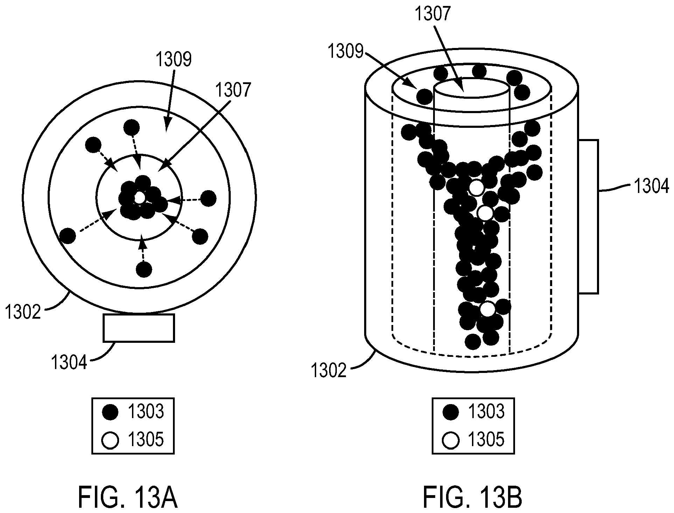

FIGS. 13A and 13B illustrate switching of unlysed whole blood according to an example not falling under the scope of the present invention. The blood sample 1309 and wash buffer 1307 are introduced at different locations in the capillary 1302. Upon activation of the transducer 1304, the red blood cells 1303 and white blood cells 1305, which may include one or more rare event red/white blood cells, are acoustically focused, and the sample 1309 and wash buffer 1307 are acoustically reoriented. Because of their relatively low numbers, white blood cells maintain separation in the rope-like structure of focused blood.

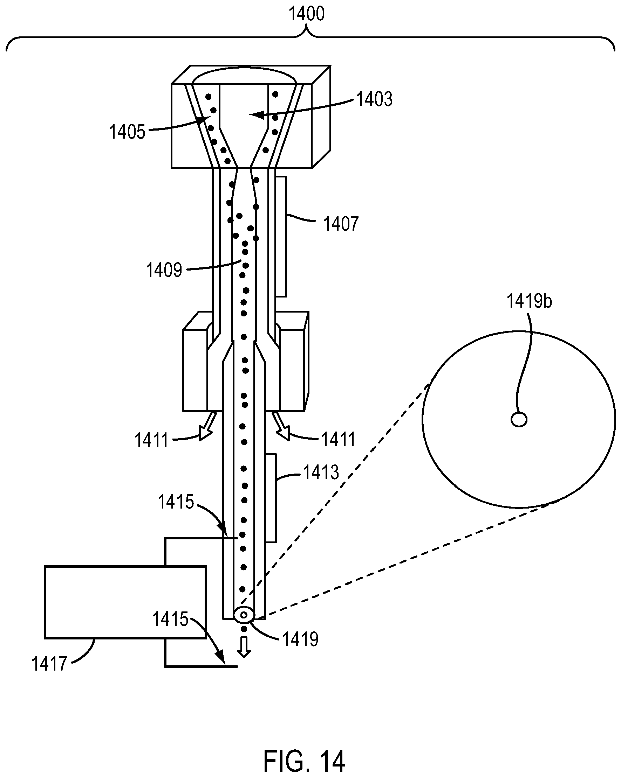

FIG. 14 illustrates a schematic of an acoustic stream switching particle counting device according to an example not falling under the scope of the present invention. The device 1400 allows for in-line analysis of a sample 1405 with particles 1409, which may include one or more rare event particles, flowing along with an unknown or unusable conductivity buffer 1403. The particles 1409 may be acoustically focused to the buffer 1403 using transducer 1407 while the sample medium may be discarded at waste outlets 141 1. The particles may be analyzed and counted by any suitable electronic detector 1417 detecting signals at electrodes 1415 as the particles move past the second transducer 1413 to the detection point 1419 with pore size 1419b.

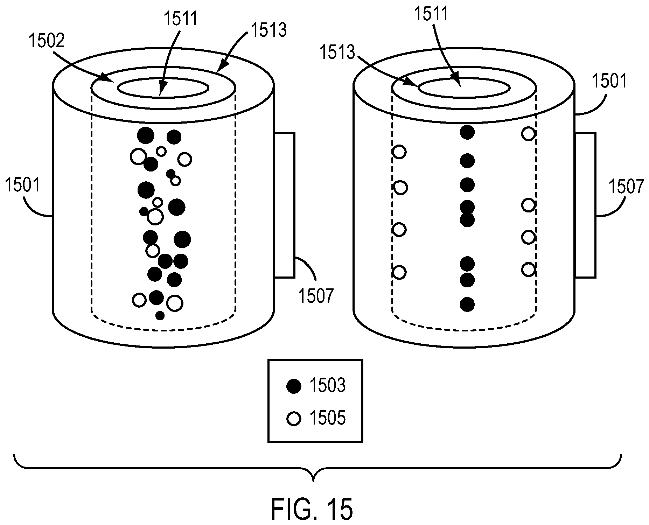

FIG. 15 illustrates the separation of negative contrast carrier particles from a blood sample core according to an example not falling under the scope of the present invention. There, a transducer 1507 may acoustically focus negative contrast carrier particles 1505, which may include one or more rare event particles, from a blood core sample 151 1 initially including them and blood cells 1503 to cross the interface 1502 between the blood core sample 151 1 and a clean buffer 1513, moving toward the capillary walls 1501. In other acoustic modes, the blood cells 1503 may be driven to the walls while the negative contrast carrier particles 1505 may be driven to the central axis.

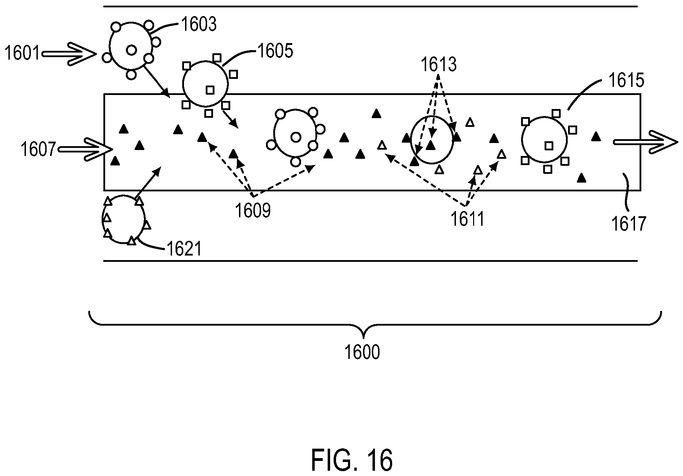

FIG. 16 illustrates multiplexed immunoassaying in an acoustic wash system according to an example not falling under the scope of the present invention. In an acoustic wash system 1600, competitive immunoassaying may be performed quickly by flowing analytes 1609/1611/1613 in a center stream 1607 and pushing beads 1603/1605/1621 pre -bound with fluorescent antigen from outer stream 1601 into the center stream 1607. Specific chemistry may placed on each of populations that are mixed in a single reaction vessel and processed in flow. The populations 1615 exiting the vessel, which may include one or more rare event populations, may be distinguished by size and or fluorescence color and/or fluorescence at analysis point 1617.

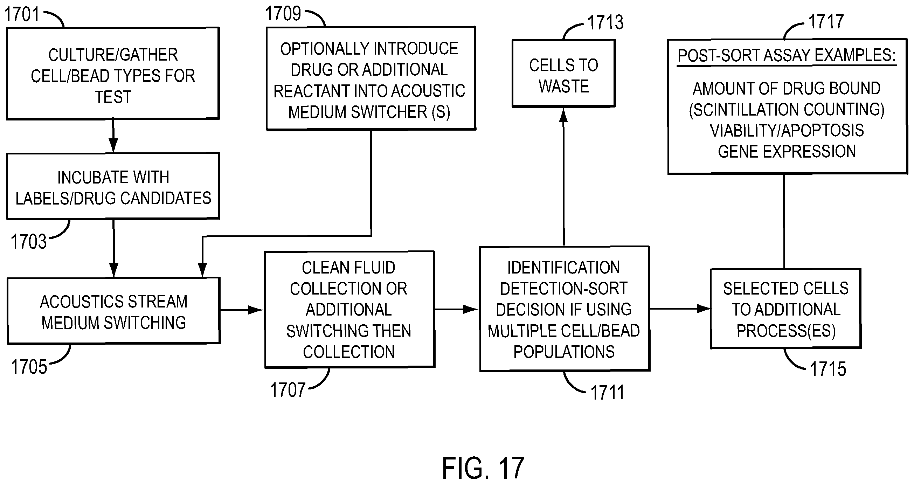

FIG. 17 illustrates a flow chart for high-throughput screening using acoustic fluid according to an example not falling under the scope of the present invention. In step 1701, cell/bead-type particles, which may include one or more rare event particles, are gathered and/or cultured for the test. In step 1703, they are incubated with labels and/or drug candidates of interest and directed to an acoustic focuser/stream switcher. Meanwhile, in step 1709, other drug(s) and/or additional reactant(s) may be introduced to the acoustic focuser/stream switcher. In step 1705, the acoustic focuser/stream switcher focuses and/or switches particles and/or streams, and may separate the particles from excess drug/ligand. In step 1707, clean fluid is collected immediately or after additional switching using the acoustic focuser/stream switcher. In step 171 1, the particles may be identified and/or sorted. Then, in step 1713, unwanted particles may be sent to waste, and, in step 1715, selected particles may be sent to additional analysis or processing. In step 1717, additional processing, including determination of drug bound, scintillation counting, viability/apoptosis determination, and gene expression analysis, may be performed.

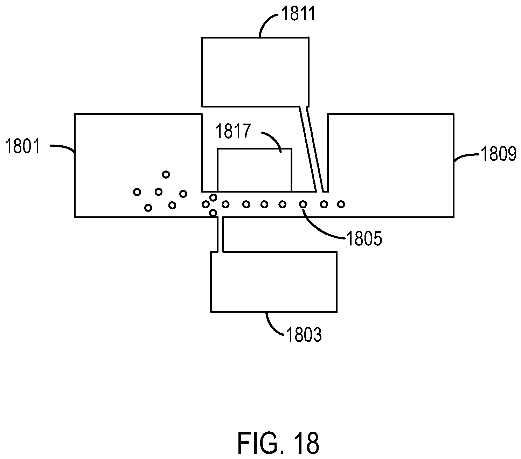

FIG. 18 illustrates a two-chamber culturing/harvesting vessel using acoustic washing according to an example not falling under the scope of the present invention. There, cells, which may include one or more rare event cells, are cultured in chamber 1801 and may be periodically sent to be acoustically focused in the channel 1805 where they may be examined for cell density/growth by the optical detector 1817. When growth goals are met and the growth medium in chamber 1801 is spent, valves may be activated to allow fresh media from the reservoir 1803 to flow along channel 1805 and spent media to be harvested in chamber 181 1. The cells may then be acoustically focused into the fresh medium and transferred to the second culture chamber 1809. The same process may then be repeated in reverse such that cells are cultured in the chamber 1809 and transferred into fresh media in the chamber 1801.

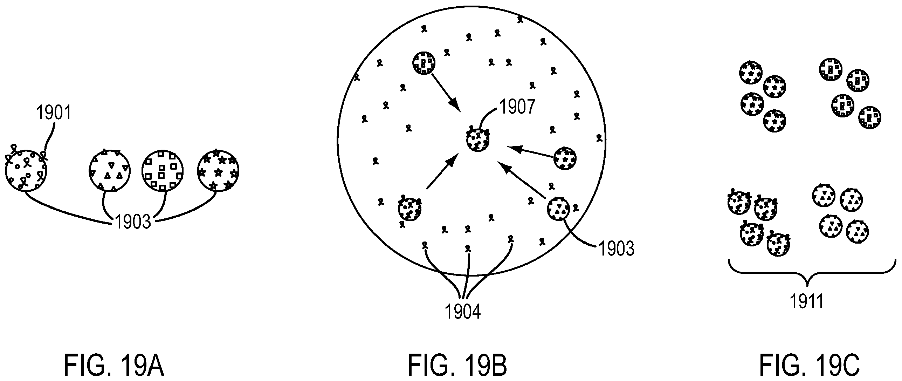

FIGS. 19A-19C illustrate aptamer selection from a library according to an example not falling under the scope of the present invention. FIG. 19A shows multiplexed beads/cells 1903 with target molecules incubated with aptamer library 1901. FIG. 19B illustrates the use of in-line acoustic medium switching to separate beads/cells 1903 and 1907 from unbound aptamers 1904. Salt and/or pH of the wash core (center circle) may be adjusted to select for higher affinity aptamers, and serial washes may be performed to increase purity. FIG. 19C illustrates sorted beads 1911.

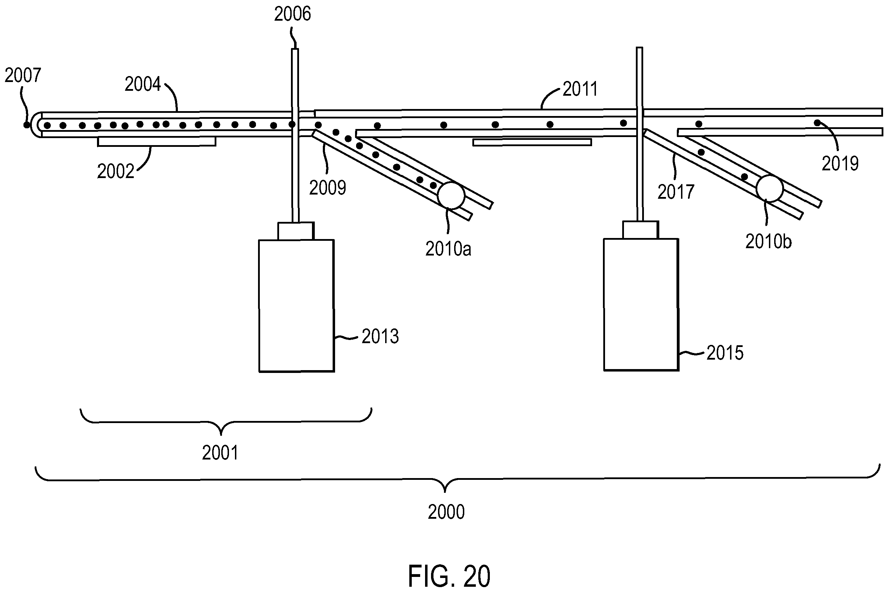

FIG. 20 illustrates a dual-stage acoustic valve sorter enabling in-line non-dilutive high speed sorting of rare cell populations according to an example not falling under the scope of the present invention. There, a sample including particles 2007 is introduced into part 2001 of an acoustic valve sorter 2000. A first transducer 2002 induces an acoustic wave in channel 2004, and an interrogation source 2013 interrogates the particles 2007 at an interrogation point 2006. Unwanted particles detected at sorting point 2009 may be directed past waste valve 2010a, whereas selected particles may be directed to downstream processing 2011 along the channel 2004 for further focusing by a second transducer 2002, interrogation by light source 2015, and appropriate sorting toward either waste valve 2010b for unwanted particles or an exit from the channel 2004 for selected particles 2019. For rare cells, this provides high speed initial valve sorting that captures cells of interest, thus enriching the ratio of desired cells in the sorted fraction, which may then be run again at a slower rate for enhancing purity. If, for example, cells are analyzed at a rate of 30,000 cells per second and the valve sorting were capable of sorting at 300 cells per second, each initial sort decision should contain an average of about 100 cells. If these 100 cells are then transferred to a second sorter (or the same sorter after the initial sort) at a slower flow rate, the cells of interest may be purified considerably.

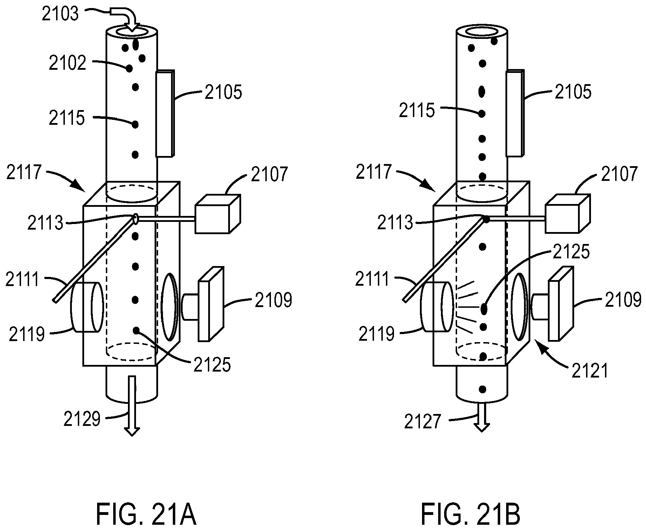

FIGS. 21A and 2 IB illustrate the optical analysis of acoustically repositioned particles and a medium according to an example not falling under the scope of the present invention. There, particles 2102, which may include one or more rare event particles, in a sample 2103 are acoustically focused (as particles 21 15) based upon acoustic contrast by a line drive 2105. The particles 2115 enter an optics cell 2117 and an interrogation source 21 11 interrogates them. An array of detectors 2107 then collects an optical signal 2113 from each particle and, if the signal meets certain user-determined criteria, the corresponding particle (or group of particles) is illuminated by light source 21 19 (e.g., a flash LED (wideband or UV)) and imaged by an imager 2109. In FIG. 21A, no image is acquired and the flow rate 2129 of particles 2125 remains unchanged. In FIG. 21B, however, the flow rate 2127 of particles 2125 is reduced to a value appropriate for the required imaging resolution to acquire an image of the particles.

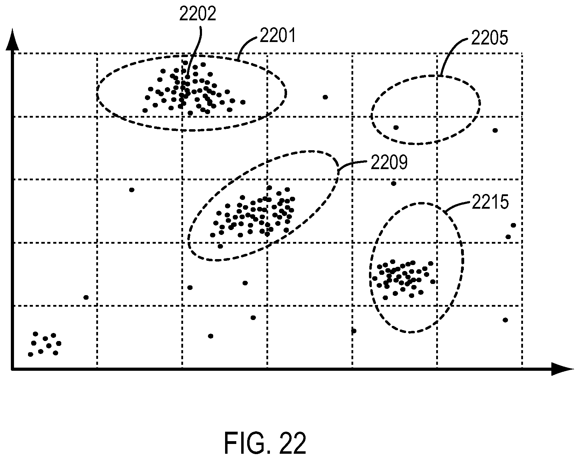

FIG. 22 illustrates a diagram of particle groupings with different parameters such as may be analyzed in a system as shown in FIGS. 21A and 21B. Each particle within a group of particles 2202 is similar as to Parameter 1 and Parameter 2 (each of which may be, for example, forward scatter, side scatter, or fluorescence). The user-defined threshold 2201 identifies particles that meet the threshold for imaging based on values for Parameter 1 and for Parameter 2. If the particle meets the user-defined threshold, then flow may be reduced to an appropriate rate for the imager to capture an in-focus image of the particle. Other detection thresholds 2205, 2209, and 2215 may also be established. Of course, not every particle need be imaged. Rather, a sampling matrix of particles from gated subpopulations may be constructed to define a set of particle images to be captured based upon their scatter and fluorescence signatures, which may allow high particle analysis rates (in excess of 2000 per second, for example). Images may capture cellular morphology, orientation, and internal structure (e.g., position and number of nuclei), and may be obtained using any suitable imaging devices known in the art, including electronic CCD panning technology. Imaging may be relatively slow (up to 300 cells/sec), but slower flow may allow long integration times that keep sensitivity high and allow good spatial resolution (up to 0.5 microns).

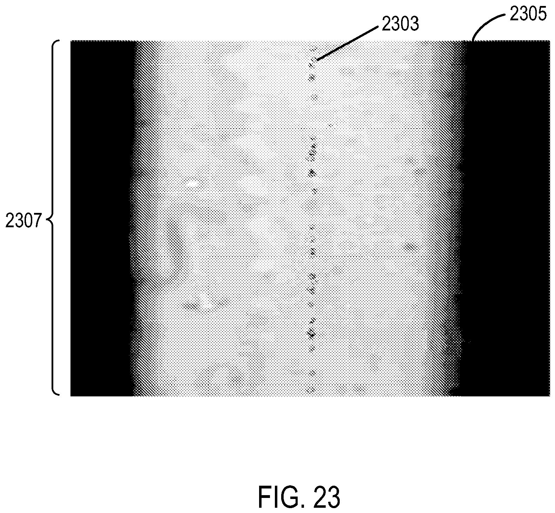

FIG. 23 illustrates acoustically repositioned particles imaged by an imager according to an example not falling under the scope of the present invention. It shows a photograph of blood cells 2303 captured from an acoustically reoriented stream 2305, where the stream in the optics cell 2307 is slowed for in-focus image capture of blood cells 2303. To create the image, a line-driven capillary of inner diameter 410 µη 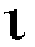 , for example, may be truncated with an optical cell (which may be, for example, a borosilicate glass cube with an interior circular cylindrical channel having the same diameter as the inner diameter of the line-driven capillary). The frequency of excitation is approximately 2.1 MHz and the power consumption of the acoustic device is 125 milliwatts. Line-driven capillaries may yield fine focusing of 5 µη 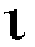 latex particles and blood cells at volumetric flow rates exceeding 5 ml/min. The line-driven capillary may be attached to a square cross-section quartz optics cell. The inner cavity of the optical cell may be circular in cross-section, and it may have the same inner diameter as the line-driven capillary to extend the resonance condition of the fluid column and thereby extend the acoustic focusing force into the optical cell.

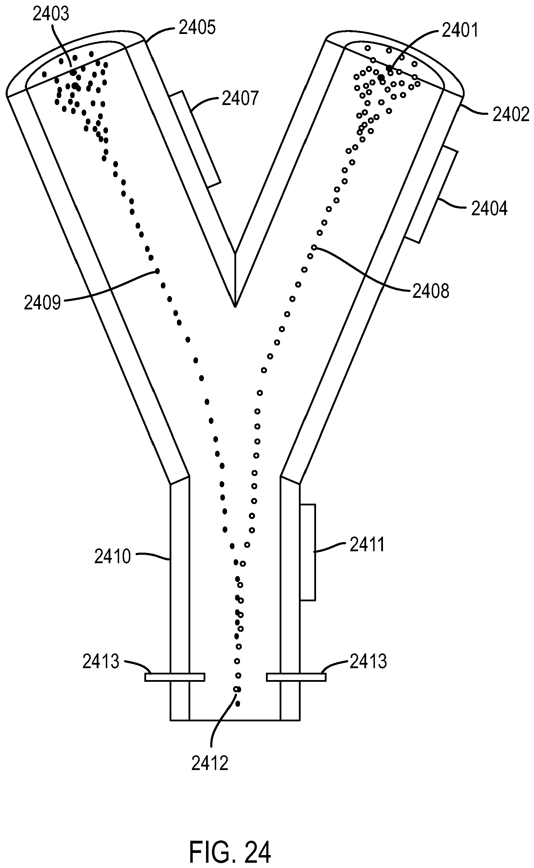

FIG. 24 illustrates acoustic fusion of particles according to an example not falling under the scope of the present invention. A first sample 2401 containing a first particle type is pumped through a first acoustic focuser 2402 driven by a PZT transducer 2404 and the particles are acoustically focused into a line 2408. A second sample 2403 containing a second particle type is similarly pumped and focused into a line 2409 in the second acoustic focuser 2405 driven by a PZT transducer 2407. The samples are flowed into a third acoustic focuser 2410 driven by a PZT transducer 241 1 such that the lines of particles are focused to form a single line where the particles can interact. Downstream, the particles pass through an electric field produced using electrodes 2413 that fuse particles 2412, potentially forming one or more rare event particles.

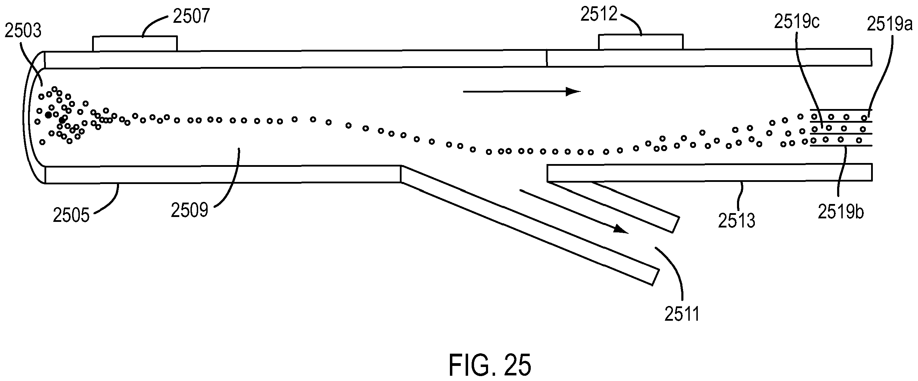

FIG. 25 illustrates acoustic focusing and separation of particles according to an example not falling under the scope of the present invention. The particles 2503, which may include one or more rare event particles, are moved to first acoustic focuser 2505, which focuses them in single file line 2509 with first transducer 2507. The line 2509 may subsequently be fed into acoustic separator 2513 equipped with second transducer 2512 and multiple exit bins 2519a, 2519b, and 2519c for separation and collection based upon one or more of size and acoustic properties. The position of line 2509 may be adjusted upon entry in the acoustic separator 2513 by drawing fluid away or otherwise removing fluid through, for example, side channel 2511.

The amount of assaying in clinical immunophenotyping panel assaying on a single patient's blood may be reduced by performing such assaying using an acoustic flow cytometer capable of controlling particle velocity and allowing long transit times as described herein, which increases the number of markers that may be assayed at once. Larger compensation free panels of, e.g., 4, 6 or more antibodies at once may be performed. For example, in a panel of anti-CD45, CD4, and CD8 antibodies used for CD4 positive enumeration of T-cells in AIDS progression monitoring, for example, CD3 may be added or substituted to aid identify T-cells. The assaying may be done using a blue (e.g., 488 nm) and red (e.g., 635 nm) laser cytometer with each antibody having a different fluorochrome (e.g., FITC, PE, PE-Cy5 and APC). Many four-antibody assaying combinations for leukemia/lymphoma classification may be used, for example, including (1) CD3, CD14, HLADr, and CD45; (2) CD7, CD13, CD2, and CD19; (3) CD5, Lambda, CD19, and Kappa; (4) CD20, CD11c, CD22, and CD25; (5) CD5, CD19, CD 10, and CD34; and (6) CD 15, CD56, CD 19, and CD34, for example. Further, protocols described in Sutherland et al., "Enumeration of CD34+ Hematopoietic Stem and Progenitor Cells," Current Protocols in Cytometry, 6.4.1-6.4.23 (2003), which is incorporated herein by reference in its entirety, may advantageously be used with one or more of the exemplary embodiments of the present invention described herein.

Many six-antibody assaying combinations for leukemia/lymphoma classification may be also used, including the examples shown in Table 1 (the left column indicates the assaying number and the top column indicates the fluorochrome used for each antibody; the specificity of each antibody is listed left to right underneath its respective fluorochrome label). By replacing fluorochromes with a long-lifetime reagents and narrow band reagents, minimal compensation antibody panels are possible. A few more examples of labels that may accomplish compensation minimized results that do not require compensation controls are shown in Table 2. The assaying may use 405 nm and 635 nm pulsed diode lasers, for example.

**TABLE 1**

| FITC | PE | PerCP-CY5.5 | PE-CY7 | APC | APC-CY7 |
|---|---|---|---|---|---|
| 1 CD7 | CD4 | CD2 | CD8 | CD3 | CD45 |
| 1. Kappa | Lambda | CD5 | CD10 | CD34 | CD19 |
| 2. CD38 | CD11c | CD22 | CD19 | CD23 | CD20 |
| 3. CD57 | CD56 | CD33 | CD 8 | CD161 | CD3 |
| 4. CD11b | CD13 | CD33 | HLADr | CD34 | CD45 |
| 5. CD71 | CD32 | CD41a | CD16 | CD64 | CD45 |

| | | | | | |
|---|---|---|---|---|---|
| | | | | | |
| | | | | | |
| | | | | | |
| | | | | | |
| | | | | | |
| | | | | | |
| | | | | | |

**TABLE 2**

| Odot® 545 | Odot® 800 | EuropiumDEADIT | PerCP | APC | Alexa Fluor® 405 |
|---|---|---|---|---|---|
| 1 CD7 | CD4 | CD2 | CD8 | CD3 | CD45 |
| 1. Kappa | Lambda | CD5 | CD10 | CD34 | CD19 |
| 2. CD38 | CD11c | CD22 | CD19 | CD23 | CD20 |
| 3. CD57 | CD56 | CD33 | CD8 | CD161 | CD3 |
| 4. CD11b | CD13 | CD33 | HLADr | CD34 | CD45 |
| 5. CD71 | CD32 | CD41a | CD16 | CD64 | CD45 |

Immunophenotyping in blood may be performed with red cell lysis by incorporating a rapid red cell lysis reagent into the central wash stream to lyse red cells inline in a flowing separator. After lysis, the unlysed white cells may be quickly transferred to a quenching buffer in a subsequent separator. This may be performed in seconds, minimizing damage or loss of white cells, and may also be used to exclude debris including lysed red cell "ghosts" that have decreased acoustic contrast resulting from the lysis process. Staining of white blood cells for immunophenotyping may be done in a small volume of blood prior to lysis, or it may be done after lysis (while carefully controlling the sample volume and number of white cells to ensure the proper immune -reaction). An acoustic wash system as described herein may be used to concentrate target cells or particles to a small volume for proper immunostaining, which is useful for samples with a low concentration of target cells. For example, such a system may be used to decrease the cost of assaying in CD4 positive T cell counting for AIDS progression monitoring.

Immunophenotyping in blood may also be performed without red cell lysis by triggering detection on fluorescence signals rather than scatter signals. Whole blood may then be stained with an appropriate antibody and fed into a cytometer without lysis, in some cases with virtually no dilution. Acoustic cytometers according to embodiments of the present invention may perform this type of assaying on approximately 100-500 µ 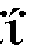 of whole blood per minute since the blood cells can be concentrated into a central core with very little interstitial space. As the white blood cells in normal patients usually make up less than 1 % of the total number of cells in whole blood, coincidence of white blood cells in the dense blood core is rare. The sole use of hydrodynamic focusing does not appear to yield such a solid core, which limits the number of cells passing through a given cross sectional area. An acoustic wash step that transfers the blood cells away from free antibodies and into clean buffer may also be performed, which may reduce fluorescent background and increase sensitivity.

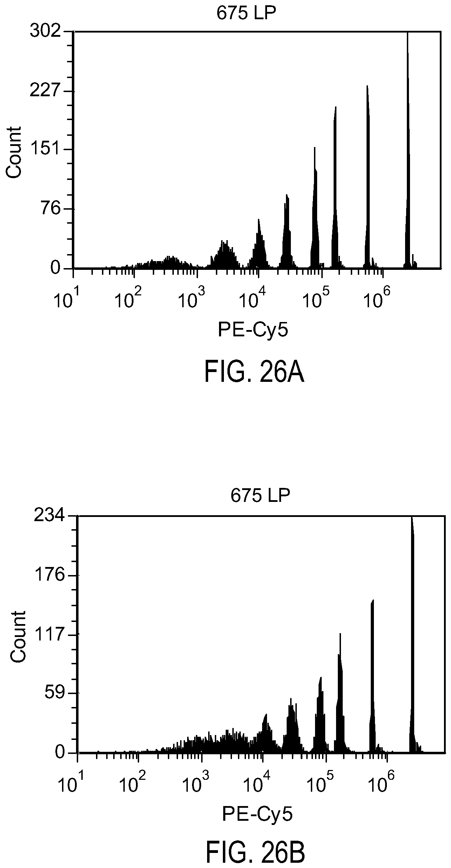

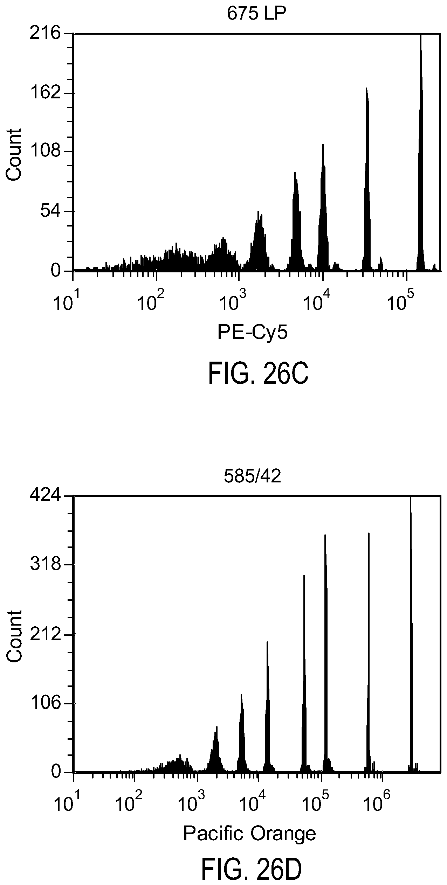

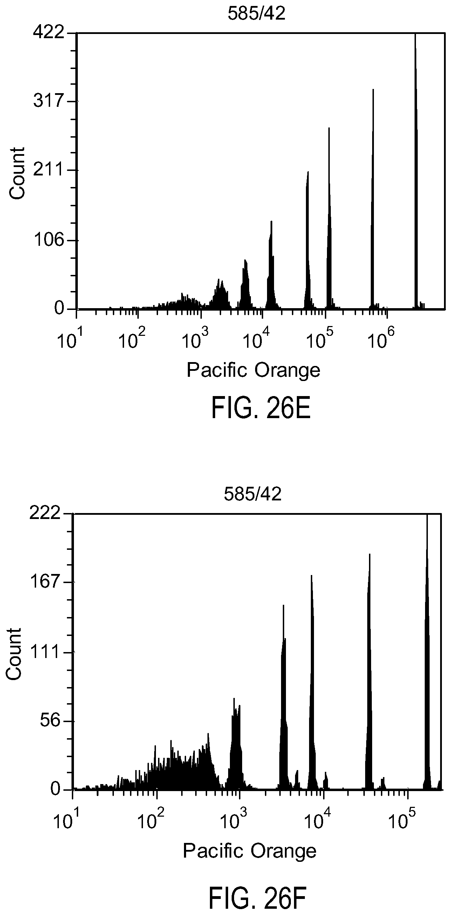

FIGS. 26A-26F illustrate comparative output plots for fluorescent microspheres run on a non-acoustic flow cytometer and on an acoustic focusing cytometer using various lasers and sensitivity settings to show the increased transit time that may be achieved using an acoustic cytometer according to an example not falling under the scope of the present invention. Fluorescent microspheres (available from Spherotech, Libertyville, IL, under the trade designation Rainbow RCP-30-5A, 3.2 µη 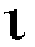 ) were run on a non-acoustic flow cytometer using only hydrodynamic focusing (FIGS. 26C and 26F) and on an acoustic focusing cytometer using upstream acoustic focusing followed by downstream hydrodynamic focusing (FIGS. 26A, 26B, 26D, and 26E) using a 488 nm blue laser (top row, FIGS. 26A-26C) and a 405 nm violet laser (bottom row, FIGS. 26D-26F). The non-acoustic flow cytometer was run at its highest sensitivity setting with a sample input rate of 15 µ 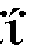 /min (right column, FIGS. 26C and 26F). The acoustic focusing cytometer was run both at its standard sensitivity setting with a 100 µ 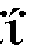 /min sample input rate (middle column, FIGS. 26B and 26E) and at its highest sensitivity setting with a 100 µ 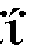 /min sample input rate with an approximately 4-fold increase in time the particle spends illuminated by the laser (left column, FIGS. 26A and 26D). Two overall flow rates (2.4 ml/min and 0.6 ml/min) were considered. The sheath and sample input rates were adjusted relative to each other to allow sample input rates of 25 µ 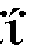 /min to 1000 µ 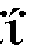 /min for the 2.4 ml/min overall rate, and 25 µ 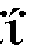 /min to 200 µ 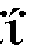 /min for the 0.6 ml/min overall rate. FIGS. 26A-26F shows that the 8-peak fluorescent rainbow microspheres (which consisted of 8 populations of different fluorescent intensity levels) are more clearly resolved by the acoustic focusing cytometer, as can be seen by the greater and clearer separation between peaks in the 8-peak bead set, especially in FIGS. 26A and 26D, which benefit from the 4-fold increase in time the particle spends illuminated by the laser (e.g., from about 10 µβ to about 40 µβ). This demonstrates the better resolution of fluorescent populations that results from slowing flow and increasing transit times.

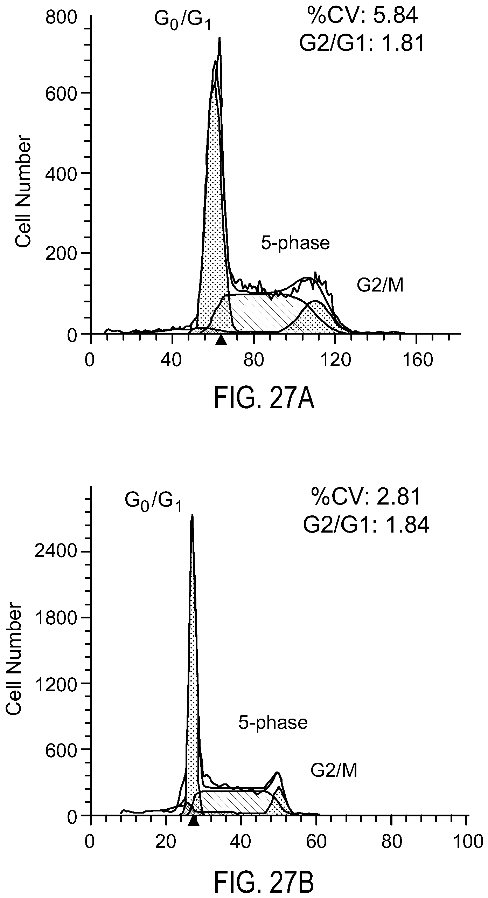

FIGS. 27A and 27B are histogram plots illustrating the effect in cell cycle analysis of an approximately 8-fold increase in transit time associated with acoustic cytometry according to exemplary embodiments of the present invention. FIG. 27A shows data obtained upon running ST486 B lymphocytes labeled with a violet stain (available from Life Technologies Corp., Carlsbad, CA under the trade designation FxCycle™) through a non-acoustic (hydrodynamic only) flow cytometer using a violet laser and a low sample rate setting (transit time was about 5 µβ). FIG. 27B shows the same type of data but obtained using an acoustic focusing cytometer with upstream acoustic focusing followed by downstream hydrodynamic focusing using a violet laser and a 25 µl/min sample input rate (transit time was about 40 µβ). Approximately 15,000 total events were acquired in both cases. The data analysis, performed using curve fitting software available from Verity Software House under the trade designation ModFit LT v. 3.2.1 yielded the underlying cell cycle phase distributions and the percent Coefficient of Variation (%CV) of the software defined GQG\ peak and G2/G1 ratio. The %CV is a measurement of the precision of the cells falling in the GQG\ peak (the lower the %CV, the more precise the measurement). FIG.27A shows more distinct populations and a lower %CV (2.81% vs. 5.84%) when using acoustic focusing.

Other similar cell cycle analysis experiments have shown that although data quality and %CV may diminish as sample rates increase using only hydrodynamic focusing, the data quality and %CV may suffer little or no changes as sample rates increase when using acoustic focusing. Specifically, for hydrodynamic focusing only at a concentration of 1 x 106 cells/ml, %CV values for sample rates of 12 µl/min, 35 µl/min, and 60 µl/min were, respectively, 4.83%, 6.12%, and 7.76%, and S-Phase data changed from 37.83% for the low 12 µl/min rate to 26.17% for the high 60 µl/min rate. But for downstream hydrodynamic focusing on an already acoustically focused sample, %CV values for sample rates of 25 µl/min, 100 µl/min, 200 µl/min, 500 µl/min, and 1000 µl/min were, respectively, 3.22%, 3.16%, 3.17%, 4.16%, and 4.21%, and S-Phase data only changed from 40.29% for the low 25 µl/min rate to 38.55% for the high 1000 µl/min rate. Thus, even at sample rates far exceeding those of non-acoustic focusing systems, acoustic systems may improve performance considerably.

Acoustic cytometers may allow one to acquire statistically significant numbers of rare events in drastically shorter periods of time because such cytometers may deliver sample input rates that are nearly an order of magnitude higher. For example, non-acoustic flow cytometers usually have a sample input rate of 10-150 µl/min, which may lead to an estimated run time to run a 2 ml sample at a concentration of 5 x 105 cells/ml of more than 13 minutes, whereas an acoustic focusing cytometer may have a sample input rate of 25-1000 µl/min, which may lead to an estimated run time to run a 2 ml sample at a concentration of 5 x 105 cells/ml of about 2 minutes. Table 3 shows the number of events that may be attained for various combination of sample concentration and sample flow rates. It is of course possible to increase the number of events by increasing the concentration. But by using high volumetric sample input rates possible with acoustic focusing, one may attain the same number at a lower concentration, i.e., high sample input rates allow for high data rates without the need to increase sample concentrations associated with non-acoustic systems.

**Table 3**

| | | | | | | | | | |
|---|---|---|---|---|---|---|---|---|---|
| | 10 | 30 | | | | | | | |
| | | | | | | | | | |
| | | | | | | | | | |
| | | | | | | | | | |
| | | | | | | | | | |
| | | | | | | | | | |

The wide range of sample input rates afforded by acoustic focusing cytometers enables high volumetric sample throughput combined with either low sheath or no sheath, or high volumetric sheath if desired. For low concentration samples, the high volumetric throughput translates to much faster particle analysis rates, which in turn translates to shorter assay times, particularly for rare event analysis in which the volumes that must be processed to achieve a statistically significant result are on the order of a milliliter or greater. This volumetric throughput can also translate to ultra high particle rates for moderately high concentration samples. If, for example, an acoustic cytometer were to use a sample concentration of 6 million cells/ml and the sample input rate were 1000 µ 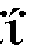 /min, the cells would be pushed through the instrument lasers at a rate of 100,000 cells/s. At the overall flow rate of 2.4 ml/min, this concentration would result in a very high rate of coincident events, but the instrument could use a much faster overall flow rate such as 24 ml/min, for example. Such performance is considerably better than in conventional cytometer, where transit times through an interrogation laser are usually only about 1-6 µβ. With an average event rate of 0.1 per unit time, 10 corresponds to an analysis rate of about 10,000 particles/s. For acceptable coincidence and an event rate of 1000 particles/s, an acoustic system of the present invention may accommodate transit times of 100 µβ, a range that greatly improves photon statistics and opens the field of application for the longer acting photo-probes. The rate of particle analysis in acoustic focusing cytometers may be up to 70,000 particles/s, and may reach more than 100,000 cells/min when periodically adjusting the velocity of the focused stream.

For a 300 µm diameter acoustic focusing capillary, a 10 transit time through the interrogation laser, and a particle rate of 10,000 particles/s, a concentration of about 2.8 x 105 cells/ml or less is required to achieve a mean event rate of less than one in ten time windows. According to Poisson statistics, this corresponds to a probability of about 1% that a time window will contain more than one event, meaning about 10% of events will be coincident. The volumetric flow rate required for this 10,000 particles/s rate example is about 2.1 ml/min. For such a 300 µm diameter capillary, a concentration of about 2.8 x 105 cells/ml is optimal for maximum throughput with about 10% coincident events. For larger particles or larger laser beams, or if fewer coincident events are desired, one may reduce coincident events by decreasing concentration. Samples run on an acoustic cytometer with a flow rate of 2.1 ml/min may be diluted up to 210-fold before more time is needed to process the sample than for a non-acoustic cytometer running at a sample rate of 10 µm/min. Thus, with simple up-front dilutions, an acoustic cytometer can operate at higher throughput than a non-acoustic cytometer for concentrations up to about 6 x 107 cells/ml. The 6 x 106 cells/ml concentration sample can be conventionally processed at a maximum rate of 1000 cells/s. An input rate of approximately 10 µ 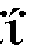 /min is typically diluted about 20-fold to reach the optimum concentration for an acoustic cytometer. By running at 2 ml/min, particles may be analyzed at nearly 10 times the rate of a non-acoustic cytometer using an acoustic focusing cytometer. In some embodiments, the particles may be analyzed at a rate of at least 2 times, at least 4 times, at least 5 times, at least 8 times, or at least 15 times the rate of a non-acoustic cytometer. If a user prefers to take advantage of longer transit times through the laser, a sample could be slowed to 0.2 ml/min where it would have similar particle analysis rates to the non-acoustic cytometer, but with longer transit times that opens the field of application for the longer acting photo-probes.

Diluting samples stained with excess antibody reduces the concentration of free antibody in solution, therefore reducing background signal and increasing sensitivity. It can therefore be possible to perform sensitive assays without a centrifugation wash, while still maintaining a relatively high analysis rate, if the dilution factor is high enough. Alternatively, one can increase the amount of staining antibody in order to drive the staining reaction faster and can then quickly dilute to reduce non-specific binding. This can result in a much faster overall work flow. A sample that normally requires a 15 minute incubation and a 15 minute centrifugation can potentially be done in just 2 minutes. If for example a 2 µm sample is stained with overall antibody staining concentration 10-fold greater than used for a 15 min incubation, the staining could be done over a very short period of just 2 minutes, after which it is diluted 500 fold to 1 ml and an antibody concentration of 50 fold less than the normal staining concentration. A 1 ml sample can be analyzed in just 1 minute at a 1000 µm/min sample input rate.

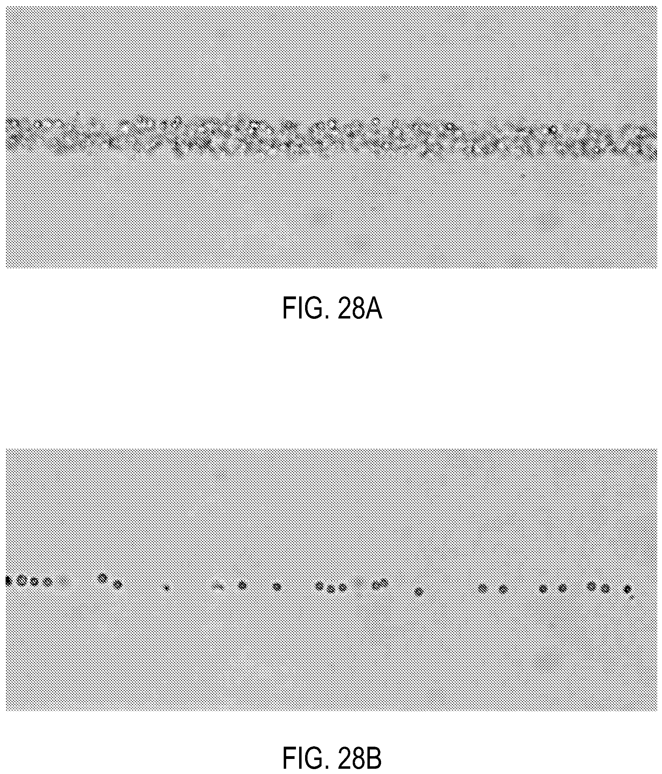

FIG. 28A is a photograph of blood having cells acoustically concentrated to form a rope-like structure flowing in an acoustic cytometer according to an example not falling under the scope of the present invention. FIG. 28B is a photograph of more diluted blood with cells acoustically concentrated in a single file line in an acoustic cytometer. The cells in FIG. 28B are concentrated enough to result in many coincident scatter events but scatter height data using violet excitation of similar samples may still be capable of resolving different white blood cell populations from each other. If cell concentration is reduced such that the ropelike structure becomes a dense line, it is possible to continue to use scatter to distinguish white cell populations from the red cells using scattering measurements. The spacing of cells in this line may be much closer than what is normally acceptable for coincident events if a fluorescent marker that stains only the desired population (e.g., a fluorescent CD45 antibody or DNA dyes that indicate nucleated cells) is used.

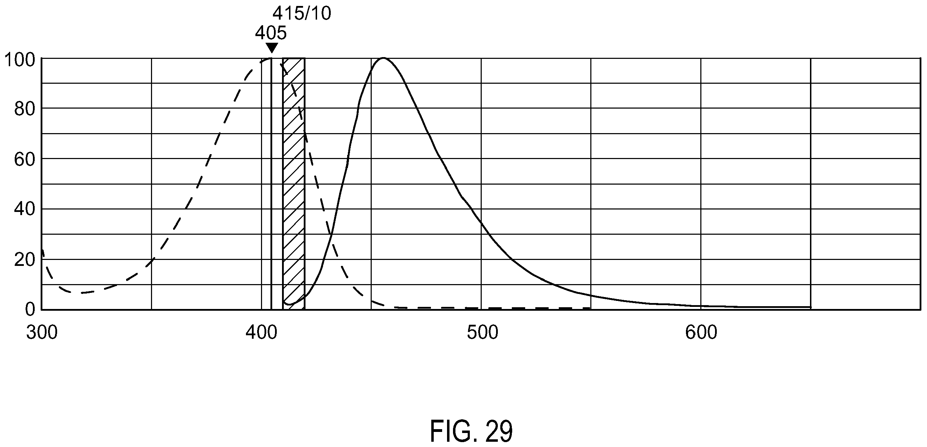

FIG. 29 is a spectral graph showing the excitation and emission spectra of the violet excited Pacific Blue™ fluorophore. It shows the 405 nm violet laser excitation and a narrow bandpass filter (415/10) that could be used for auto fluorescence correction in combination with the Pacific Blue™ fluorophore. Autofluorescence may be collected in a tight band of color near the peak emission of the autofluorescence (peak emission near 430 nm) but in a region of relatively low Pacific Blue™ fluorescence (peak emission near 455 nm).

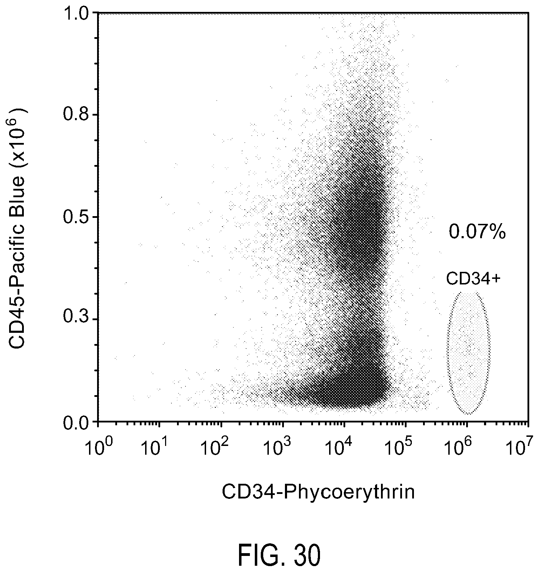

FIG. 30 illustrates the detection of a rare event population of 0.07% CD34 positive cells as a subpopulation of the live CD45 positive cells according to an example not falling under the scope of the present invention. Approximately eight hundred CD34 positive KG- la cells were spiked into 100 µ 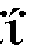 whole blood collected from a normal donor. The sample was labeled with a CD45 Pacific Blue™ conjugate and a CD34 phycoerythrin conjugate. After incubation, High Yield Lyse solution was added for red blood cell lysis, and SYTOX® AADvanced™ Dead Cell Stain was added for labeling. The cells were analyzed on an acoustic focusing cytometer with upstream acoustic focusing followed by downstream hydrodynamic focusing at a high throughput rate setting (200 µ 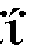 /min) and about 200,000 total events were collected. Dead cells were eliminated from the analysis by gating on SYTOX® AADvanced™ negative cells and then looking at CD45 vs. CD34 events.

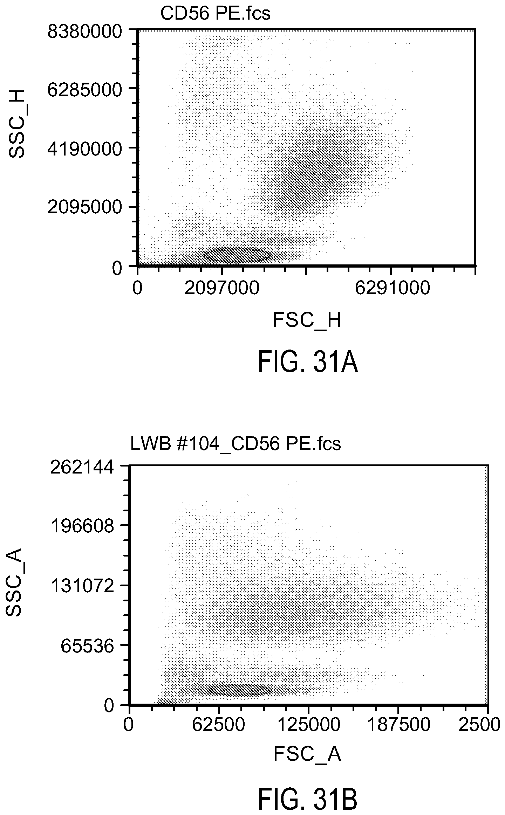

FIGS. 31A and 3 IB respectively show plots of Forward Scatter (FSC) vs. Side Scatter (SSC) for lysed whole blood in an acoustic focusing system and in a solely hydrodynamic focusing system. FIG. 31A shows a plot of FSC vs. SSC for lysed whole blood at 405 nm excitation in an acoustic focusing system with a 100 µm/min sample input rate. FIG. 3 IB shows the same at 488 nm excitation in a hydrodynamic focusing system with a 15 µm/min sample input rate. Both FSC and SSC were collected using a 405 nm laser (violet) as the primary laser line. FIG. 31A shows a greater separation between populations relative to FIG. 3 IB, as well as the possible creation of an additional population of cells that appears to be consistent with dead cells.

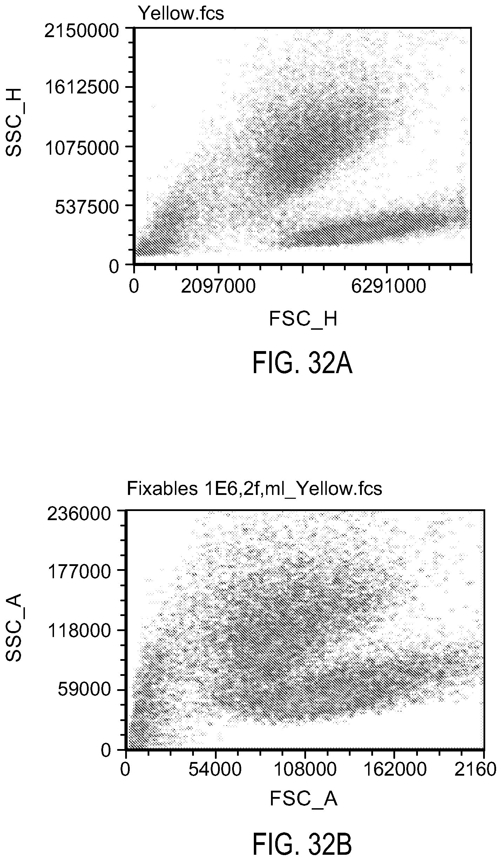

FIGS. 32A and 32B show plots of FSC vs. SSC for Jurkat cells obtained using the same systems and parameters described above for FIGS. 31A and 3 IB, respectively. Again, FIG. 32A shows a greater separation between populations relative to FIG. 32B, showing the increased performance of the acoustic focusing system.

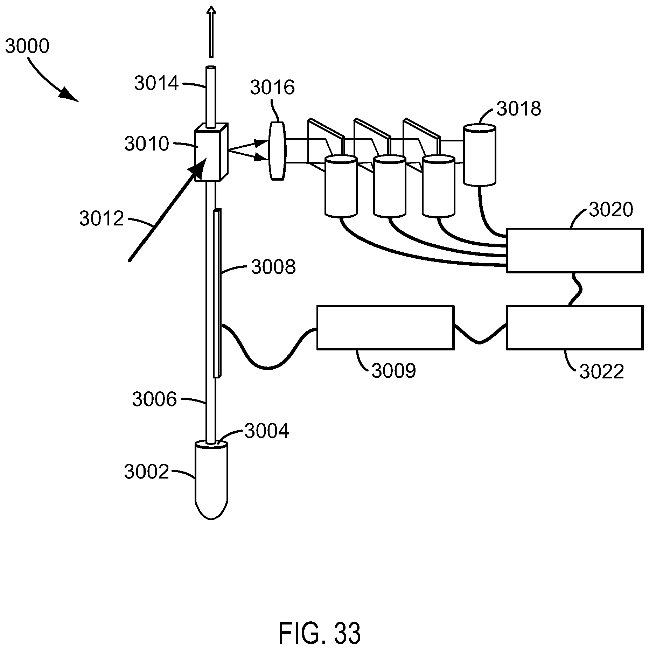

FIG. 33 illustrates a schematic diagram of an acoustic flow cytometry system according to an example not falling under the scope of the present invention. The system 3000 has a sample tube 3002 containing a sample 3004 including particles, which may include one or more rare event particles, pumped through a capillary 3006. A piezoelectric element 3008, arranged adjacent to the capillary 3006, may be operated by control circuitry 3009 under the control of a processor 3022, and may apply acoustic energy to acoustically focus and/or fractionate the particles based on their properties, including, e.g., size and density. The acoustically focused particles may then enter an interrogation zone 3010 where they pass through the beam of an interrogation source 3012 (e.g., a highly focused laser beam or two or more laser beams), and all or some of them may be collected a waste site 3014. The scattered light resulting from the interaction of the interrogation source 3012 with the particles may be collected by a collection lens and optical collection block 3016, and may be analyzed with an array of photomultiplier tubes 3018 interconnected with a data acquisition module 3020 and the processor 3022.

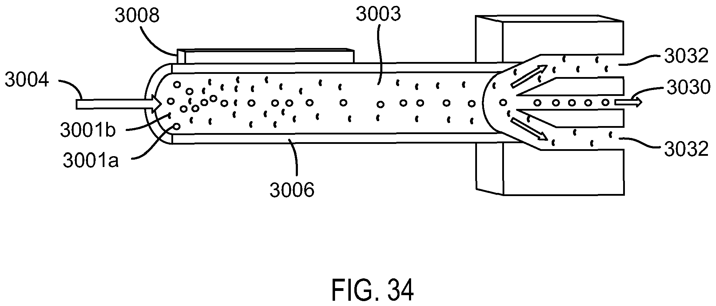

FIG. 34 illustrates a schematic diagram of an acoustic focusing capillary in an acoustic flow cytometer according to an example not falling under the scope of the present invention to show the effect of the piezoelectric element on the particles. The particles 3001a and 3001b in the sample 3004 travel in a background or carrier fluid 3003 in the acoustic focusing capillary 3006. The piezoelectric element 3008, which may be a piezoceramic element, acoustically focuses the particles 3001a into an inner coaxial stream 3030 and the particles 3001b into an outer coaxial stream 3032.

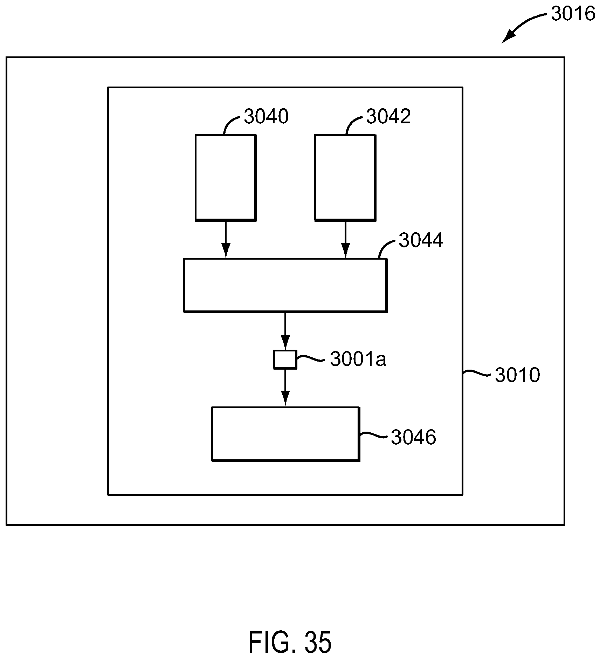

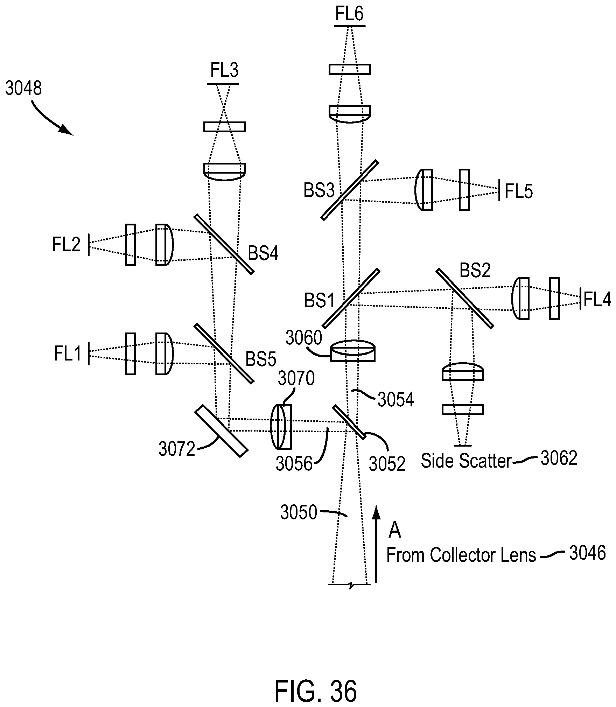

FIG. 35 illustrates a portion of an optical collection block in an acoustic flow cytometer according to an example not falling under the scope of the present invention. The optical collection block 3016 includes an interrogation zone 3010 having a first laser 3040 (e.g., a 405 nm violet laser) and a second laser 3042 (e.g., a 488 nm blue laser). The beams emitted by the lasers 3040 and 3042 enter an arrangement of beam shaping optics 3044, which tightly focuses them on the acoustically focused coaxial stream of particles 3001a (FIG. 34). As the particles 3001a pass through the laser beams, the scattered light is collected by a collector lens 3046 and enters an optical collection block 3048 (FIG. 36) before passing to the detector array 3018 (FIG. 33). The 405 nm wavelength may be very useful with or without pulses when coupled with long transit times, and is especially useful for excitation of quantum dots useful for many-colored assaying. Other wavelengths may also be used, including 640 nm, for example. The same particle may be analyzed by two different lasers. A stronger laser may be used to analyze dimmer particles, while a different, weaker laser may be used for brighter particles. A single weaker laser may also be used with increased transit time with signal integration, and such a laser may also be used in a pulsed system by administering stronger and weaker pulses at different times.

The use of two lasers is useful to improve auto-fluorescence and background variance concerns and increase signal-to-noise ratio by reducing the variance of both signal and background. For example, the first laser may excite auto-fluorescence above the wavelength of the excitation laser, and the signal detected above that wavelength may used to estimate the auto-fluorescence contribution expected for the primary detection laser. This may be done with a system having a violet laser and a blue laser, or only a violet laser, or a violet laser exciting more than one color if there is a separate color band to monitor the auto-fluorescence. Only the blue fluorescence channel may be monitored, and expected contribution in other channels may then be subtracted. A red laser may also be used. For pulsed or modulated systems with long lifetime probes, the short lived contribution of the auto-fluorescence combined with the initial output of the long lifetime probe may be measured. Fluorescence of the long lifetime probe after the auto-fluorescence has decayed may also be measured and back calculated to determine the auto-fluorescence contribution in all channels.

According to exemplary embodiments of the present invention, four-color assaying with only auto-fluorescence compensation may be performed using Qdot® 525, 585, 655, and 800 and a single violet diode laser. If a second laser, such as, e.g., a 650 nm or 780 nm laser diode is added, other combinations that are virtually compensation free can be added with even more colors. For example, Qdot® 525, 565, 605, 705 and Alexa Fluor® 750, which is excited very efficiently at 780 nm, may be added. Other dye combinations may also be used, as may other lasers or diodes, including a 473 nm DPSS blue laser, a 488 nm wavelength laser, and a green DPSS module. If, for example, the rest period is 1 and four different lasers are used with 10 ns pulses, each laser is triggered every microsecond, with a pulse of a different wavelength hitting the target about every 250 ns. A second low power pulse for each laser may be used to extend dynamic range (the brightest signals may be quantified from the low power pulse, dimmest from the high power pulse). Using lasers at 405 nm, 532 nm, 650 nm, and 780 nm, four colors and autofluorescence may be monitored with virtually no compensation using: 405 nm-autofluorescence and Pacific Orange™, 532 nm-PE or Cy3, 635 nm-Alexa Fluor® 647, and 780 nm-Alexa Fluor® 790, although because there is some excitation of PE at 405 nm and some excitation of Alexa Fluor® 790 at 635 nm, a slight compensation might be required.

FIG. 36 illustrates a schematic diagram of an optical data collection block in an acoustic flow cytometer according to an example not falling under the scope of the present invention. The scattered light 3050 from the lasers 3040 and 3042 is collected by the collector lens 3046, enters the collection block 3048 in the direction of arrow A, and proceeds to a pair of spatial filtering pinholes 3052, one of which being backed by a mirror (not shown), which separates the beam 3050 into a primary beam 3054 and a secondary beam 3056. The primary beam 3054 enters a collimating lens 3060 and traverses beam splitters BS1, BS2, and BS3 and associated focusing lenses to enter fluorescence channels FL4, FL5, and FL6, as well as side scatter channel 3062 in the detector array 3018 (FIG. 33). The secondary beam 3056 enters a collimating lens 3070 and traverses mirror 3072 and beam splitters BS5 and BS4 and associated focusing lenses to enter fluorescence channels FL1, FL2, and FL3 in the detector array 3018.

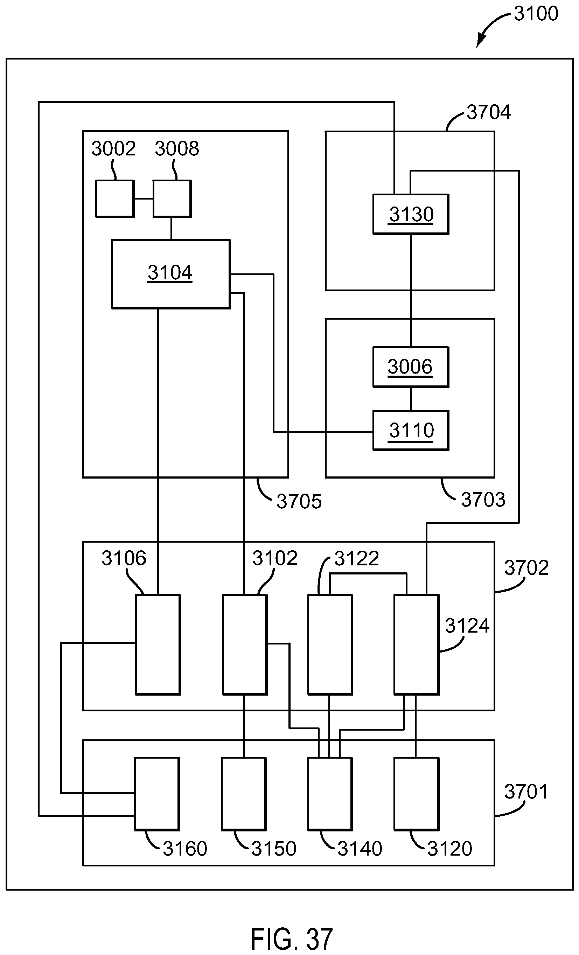

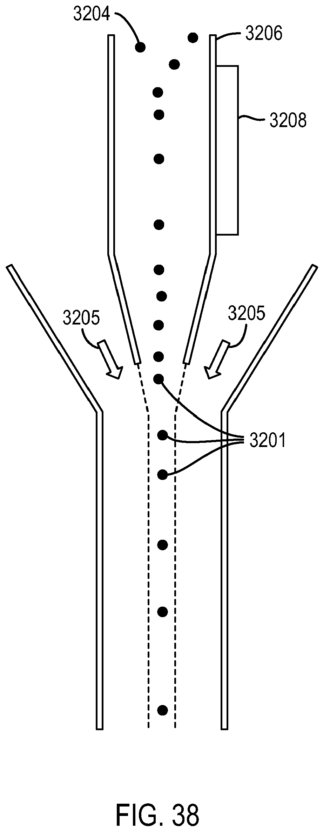

FIG. 37 illustrates a schematic diagram of a fluidics system in an acoustic flow cytometer according to an exemplary embodiment of the present invention. In system 3100, a sample pump 3102 in a pump section 3702 pumps the sample fluid 3004 (FIG. 34) from sample tube 3002 into a manifold 3104 in a sample section 3705 and to a diaphragm pump 3106 after passing by a bubble sensor 3008 used to detect the presence of air in the sample line. As a result, there may be no need to do predetermined volumetric sample draws, and samples may be drawn to the end-of-sample state, as detection of air will flag the end of a sample during the sample drawing stage. The bubble sensor 3008 may be based on various modalities, including ultrasonic, impedance, capacitive, optical, or any other type of sensor modality that can determine the presence of air relative to a fluid sample. The sample fluid in manifold 3104 may then be pumped to a lower manifold 31 10 in a lower manifold section 3703 for entry into the acoustic focusing capillary tube 3006. A sheath fluid pump 3124 pumps the sheath fluid 3205 (FIG. 38), which is maintained in a sheath reservoir 3120 in reservoir section 3701, into a sheath buffer tank 3122 and then into an upper manifold 3130 in upper manifold section 3704 at the capillary tube 3006. Water and wash fluid may be maintained in a water reservoir 3140 and wash fluid reservoir 3150, and pumped into the system as necessary, while waste is collected in a waste reservoir 3160.

FIG. 38 illustrates a schematic diagram of a single transducer acoustic focusing capillary with upstream acoustic focusing followed by downstream hydrodynamic focusing according to an exemplary embodiment of the present invention. The sample fluid including particles 3204, which may include one or more rare event particles, flows through the capillary 3206. A single transducer 3208 may then acoustically focus particles 3204 (as 3201) in a first region along a substantially central axis of the capillary 3206. This may be done prior to any hydrodynamic focusing. A sheath fluid 3205 may then be used to flow around the acoustically focused sample fluid and particles and further focus, hydrodynamically, the fluid and particles 3201 in a second region downstream of the first region. It would be possible to use more than one transducer for the upstream acoustic focusing, but a single transducer is preferred. Also, it would be possible to use a first, upstream acoustic focusing phase followed by a second, downstream dual focusing phase that would both acoustically and hydrodynamically focus the particles 3201. Preferably, however, the particles are first acoustically focused and then are hydrodynamically focused at a second location downstream of the acoustic focusing location, without further acoustic focusing, as it turns out that this combination offers particularly impressive rare event detection abilities.

Although acoustic focusing may be used alone in lieu of hydrodynamic focusing with considerable benefits, it turns out that certain configurations jointly using acoustic focusing and hydrodynamic focusing are particularly useful. For example, joint acoustic/hydrodynamic focusing may further stabilize the absolute location of a particle stream against external forces; may further tighten the focus of the focused particle stream (which may be particularly useful where the sample is dilute or where "sticky" cells must be kept at lower concentration to prevent aggregation); and may help ensure that the sample does not contact the walls (which may be important in some applications). Finally, it turns out, unexpectedly, that a single use of acoustic focusing upstream, followed by a downstream use of hydrodynamic focusing along the same channel, yield excellent properties allowing the detection of certain rare events in a relatively short period of time, as described in some of the above exemplary embodiments.

According to an example not falling under the scope of the present invention, the sample pump 3102 and the sheath fluid pump 3124 may be controlled by a processor to adjust the volumetric ratio of sheath fluid to sample fluid in the capillary tube 3006 to maintain a substantially constant overall particle velocity in the interrogation zone. For example, the volumetric ratio of sheath fluid to sample fluid may be maintained from about 1 : 10 to about 100: 1. The ability to adjust sample input rates while maintaining a tight focused particle stream enables adjustment of velocity through (and thus time spent in) an interrogating laser. Longer interrogation times allow higher sensitivity measurements by allowing the collection of more photons over time. When a particle analysis system may only control sample flow, the adjustable flow rate limits the ability to increase or decrease particle analysis rates for a given sample concentration as increasing or decreasing the sample input rate necessarily increases or decreases the transit time. By including a sheath flow that is adjusted in response to sample input such that the overall fluid flow is kept constant, it is possible to allow a wide range of sample input rates without changing the overall fluid velocity. Then, by changing overall fluid velocity, it is possible to take advantage of the benefits of longer interrogation times. By not accelerating the particles with the coaxial sheath flow, particle transit times through the laser interrogation region of an acoustic flow cytometer may be about 20-100 times longer than in conventional hydrodynamic focusing systems. Preferably, they may be at least 20 µβ, at least 25 µβ, at least 30 µβ, at least 35 µβ, at least 40 µβ, at least 60 µβ, at least 80 µβ, or at least 100 µβ. This may allow higher sensitivity optical measurements while retaining similar particle analysis rates.

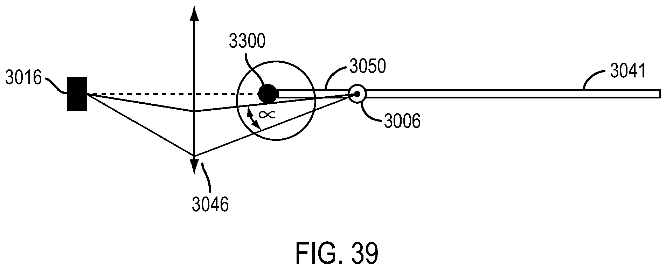

FIG. 39 illustrates a schematic diagram of a blocker bar apparatus that may adjust a forward scatter aperture in an acoustic flow cytometer according to an example not falling under the scope of the present invention. The blocker bar 3300 may be used to change the aperture of the forward scattered light before the forward scattered light enters the collector lens 3048. The beams 3041 emitted by the lasers 3040 and 3042 interact with the acoustically focused stream of particles (flowing out of the plane of the paper in the figure). The blocker bar 3300 may be mounted on the underside and off-axis of a cylindrical peg 3302 so that spinning the peg 3302 changes its location relative to the propagation of the scattered laser beam 3050. This allows an operator to align the blocker bar 3300 with the lasers 3040 and 3042 once the lasers are aligned with the particle stream. The aperture for the forward scatter 3050 may be changed by changing the shape of the blocker bar 3300, which may be done by adding a collar onto the bar. The peg 3302 may be rotated to position the blocker bar 3300 to provide an aperture a of the forward scatter 3050 of between about 15° and about 23°, or between about 17° and 21°, or about 19°.

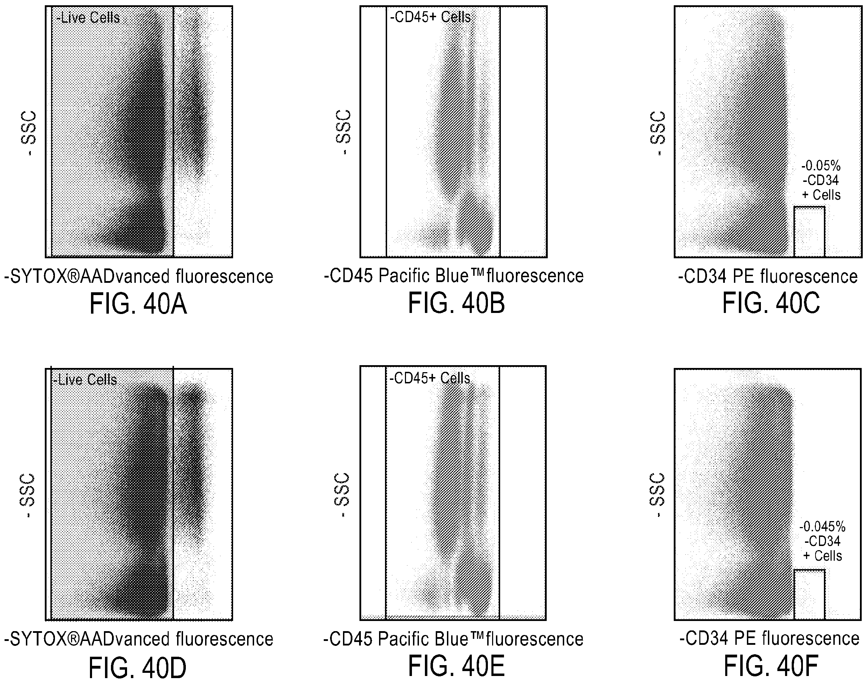

FIGS. 40A-40F illustrate the detection of a rare event populations of 0.050% and 0.045% CD34 positive cells as a subpopulation of the live CD45 positive cells according to an exemplary embodiment of the present invention. There, peripheral blood was stained and run using an acoustic focusing cytometer with upstream acoustic focusing followed by downstream hydrodynamic focusing at flow rates of 500 µl/min (FIGS. 40A-40C) and 1000 µl/min (FIGS. 40D-40F) with a stop gate set at 500,000 total cells. FIGS. 40A and 40D shows the total cells stained with SYTOX® AADvanced™ Dead Cell Stain and show the live cell gate. FIGS. 40B and 40E show cells gated on live cells. FIGS. 40C and 40F show cells gated on live CD45 positive cells. At the 500 µl/min flow rate, the acquisition time was about 6 minutes, 26 seconds; 0.050% CD34 positive cells of leukocytes were detected; and direct measurement of CD34 positive cells was 0.07 cell/µl. At the 1000 µl/min flow rate, the acquisition time was about 4 minutes, 28 seconds; 0.045% CD34 positive cells of leukocytes were detected; and direct measurement of CD34 positive cells was 0.05 cell/ µl.

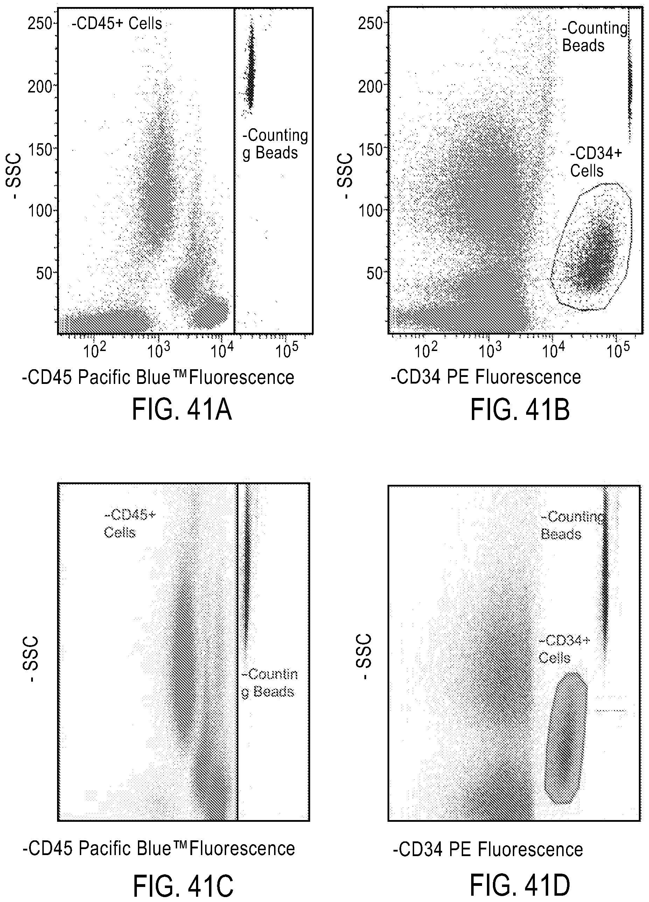

FIGS. 41A-41D illustrate comparative output plots for cell detection run on a non-acoustic flow cytometer and on an acoustic focusing cytometer. Peripheral blood from a normal donor was spiked with CD34 positive cells and 50 µl of CountBright™ Absolute Counting Beads and used to calculate CD34 counts. FIGS. 41A and 41B show data gated on live cells (Fig. 41 A) and CD45 positive cells (Fig. 4 IB) run on a hydrodynamic focusing only flow cytometer. FIGS. 41C and 41D show data gated on live cells (Fig. 41C) and CD45 positive cells (Fig. 4 ID) run on an acoustic focusing cytometer with upstream acoustic focusing followed by downstream hydrodynamic focusing according to an exemplary embodiment of the present invention. Using the hydrodynamic focusing only flow cytometer, the acquisition time was 13 minutes, 49 seconds; the CD34 positive cell count derived using beads was 8.01 cells/ µl; and no direct measurement was yielded. Using the acoustic focusing flow cytometer, the acquisition time was 1 minute, 17 seconds; the CD34 positive cell count derived using beads was 7.91 cells/ µl ; and direct measurement of CD34 positive cells was 8 cells/ µl.

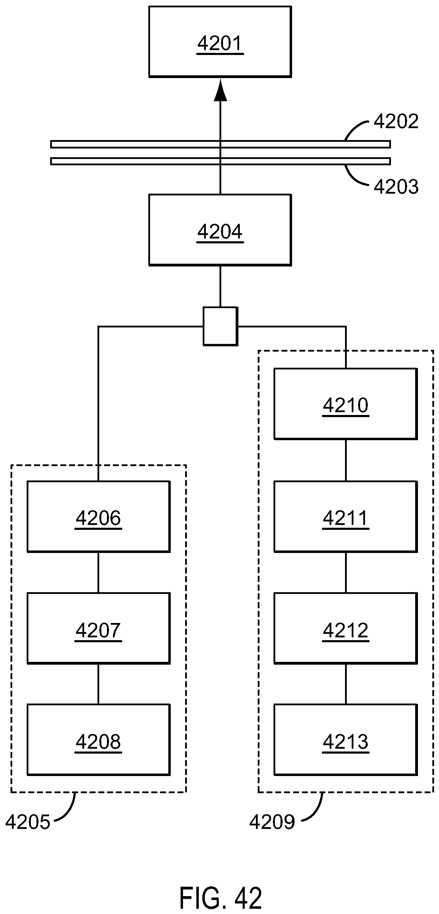

FIG. 42 illustrates a schematic of components of an acoustic focusing cytometer according to an example not falling under the scope of the present invention. The exemplary cytometer includes a first fluid path 4205 for sheath fluid including a sheath fluid 4208, a sheath fluid filter 4207, and a sheath fluid reservoir 4206, and a second fluid path 4209 for sample fluid including a sample fluid 4213, a bubble sensor 4212, a sample loop 421 1, and a capillary assembly 4210. The sheath and sample fluids may flow in a flow cell 4204 and first and second lasers 4202 and 4203 may interrogate particles that may be in the sample fluid. Finally, some sheath and sample fluid may be delivered to a waste container 4201.

Embodiments of the present invention may analyze rare cell events faster; run more cells in less time, without loss of sensitivity; detect dim expression of antigens in cells; and resolve cell poputations more distinctly, with less ambiguity. They may provide powerful control over sample concentration, flow rate, the number of photons detectable, experiment length, and sample throughput. Acoustic focusing cytometry may reshape the way many current cellular assays are performed, as well as provide opportunities for creating new cellular assays. It may use ultrasound waves at more than 2 MHz, for example, to position cells into a single focused line along the central axis of a flow channel without high-velocity or high-volume sheath fluid, and may concentrate cells regardless of volume. Acoustic focusing may exploit the physical differences between cells or particles relative to the background medium, allowing cells to remain tightly focused. The acoustic focusing may concentrate cells in the center of the fluid with sound energy, which creates considerable flexibility in the sample concentration analyzed. More importantly, acoustic focusing may separate the alignment of cells from the particle flow rate, so the flow rate of the cells may be increased or decreased without disrupting the focus of cells in the capillary. The precision of this adjustable flow rate may help researchers to determine the number of cells analyzed and the amount of time the cells spend in the focused laser beam. Additional features and advantages of acoustic flow cytometry may be found in Ward et ah, Fundamentals of Acoustic Cytometry, Current Protocols in Cytometry, Supplement 49, 1.1 1.1-1.22.12(2009).

In systems using hydrodynamic focusing only, the sample core is "pinched" by the fast flowing sheath fluid, and the volume of sheath fluid is typically greater than 100 to 1000 times that of the sample flow. Such large ratios lead to low sample input rates, which usually hinders resolution. In accordance with the teachings of the present invention, however, a previously acoustically focused sample may be further focused, hydrodynamically, downstream of the acoustic focusing, the volumetric ratio between the sheath fluid and the sample fluid may be reduced significantly. For example, that volumetric ratio may be reduced to about 50 to 1, 40 to 1, 30 to 1, for example. These numbers are exemplary and other fractional ratios between them may also be used. The system may flow a fluid sample with particles in a sample channel in the capillary, while maintaining a total input rate of sample fluid and sheath fluid constant to ensure that an interrogation time of the particles through one or more interrogating lasers remains constant regardless of the sample fluid input rate. In accordance with the present disclosure, the system may also flow the sample fluid at a sample flow rate between about 25 µl/min to about 1000 µl/min and the sheath fluid at a sheath flow rate between about 2375 µl/min to about 1400 µl/min.

In accordance with the present disclosure, there is provided a flow cytometer, including (1) a capillary including a sample channel; (2) at least one vibration producing transducer coupled to the capillary, the at least one vibration producing transducer being configured to produce an acoustic signal inducing acoustic radiation pressure within the sample channel to acoustically concentrate particles flowing within a fluid sample stream in the sample channel; and (3) an interrogation source including a violet laser and a blue laser, the violet and blue lasers being configured to interact with at least some of the acoustically concentrated particles to produce an output signal.

In such a flow cytometer, the at least one vibration producing transducer may include a piezoelectric device, the violet laser may have a wavelength of about 405 nanometers, and the blue laser may have a wavelength of about 488 nanometers. Further, the capillary may further include a sheath flow channel configured to flow a sheath fluid around the fluid sample stream downstream of the acoustic concentration of the particles by the acoustic radiation pressure to hydrodynamically concentrate the acoustically concentrated particles within the fluid sample stream. Furthermore, such a flow cytometer may include a first pump configured to flow a fluid sample including particles in the sample channel in the capillary and a second pump configured to flow a sheath fluid in the sheath flow channel, and the first and second pumps may be configured to maintain a total input rate of sample fluid and sheath fluid flowing in the capillary constant to ensure that an interrogation time of the at least some of the acoustically concentrated particles through the violet and blue lasers remains constant regardless of the sample fluid input rate.

Such a flow cytometer may also include an optical module to collect the output signal from the interrogation source; a detector module to detect an output signal of the optical module; and a data acquisition module to process an output of the detector module, and it may further include a processor configured to control at least one of the at least one vibration producing transducer, the detector module, and the data acquisition module. Further, such a flow cytometer may include a blocker bar between the capillary and the optical module, which may be attached to a substantially cylindrical peg that is rotatable to position the blocker bar and adjust an output aperture of the output signal of the interrogation source, and the output aperture of the output signal of the interrogation source may be between about 17 degrees and about 21 degrees. Furthermore, the optical module may include a collection lens to collect the output signal from the interrogation source, and an output of the collection lens may be split into two beams with a spatial filtering pinhole device, wherein a first beam is output from the violet laser and a second beam is output from the blue laser. And, the detector module may include detectors to detect a forward scatter signal and a side scatter signal from the first beam output by the violet laser.

In accordance with the present disclosure, there is provided a flow cytometer, including (1) a capillary configured to allow a sample fluid including particles to flow therein; (2) a first focusing mechanism configured to acoustically focus at least some of the particles in the sample fluid in a first region within the capillary; (3) a second focusing mechanism configured to hydrodynamically focus the sample fluid including the at least some acoustically focused particles in a second region within the capillary downstream of the first region; (4) an interrogation zone in or downstream of the capillary through which at least some of the acoustically and hydrodynamically focused particles can flow; and (5) at least one detector configured to detect at least one signal obtained at the interrogation zone regarding at least some of the acoustically and hydrodynamically focused particles.

Such a flow cytometer may also include a sample fluid pump configured to flow a sample fluid into the capillary at a sample flow rate between about 25 microliters per minute to about 1000 microliters per minute and a sheath fluid pump configured to flow a sheath fluid into the capillary at a sheath flow rate between about 2375 microliters per minute to about 1400 microliters per minute. Further, the first focusing mechanism may be configured to focus at least some of the acoustically focused particles in the first region to a single file line flowing from the first region to the second region, and the sample fluid and sheath fluid pumps may be configured to maintain a total rate of sample fluid and sheath fluid flowing in the capillary constant to ensure that an interrogation time of the at least some of the acoustically and hydrodynamically focused particles through the interrogation zone remains constant regardless of the sample flow rate.

According to the present disclosure, there is provided a method for detecting a rare event using a flow cytometer, including: (1) flowing a sample fluid including particles into a channel; (2) acoustically focusing at least some of the particles in the sample fluid in a first region contained within the channel by applying acoustic radiation pressure to the first region; (3) hydrodynamically focusing the sample fluid including the at least some acoustically focused particles by flowing a sheath fluid around the sample fluid in a second region downstream of the first region; (4) adjusting a volumetric ratio of the sheath fluid to the sample fluid to maintain a substantially constant overall particle velocity in an interrogation zone in or downstream of the second region; (5) analyzing at least some of the acoustically and hydrodynamically focused particles in the interrogation zone; and (6) detecting one or more rare events based on at least one signal detected at the interrogation zone, the one or more rare events being selected from the group consisting of one or more rare fluorescence events, one or more rare cell types, and one or more dead cells.

In accordance with the present disclosure, there is provided a computer readable medium including computer readable instructions, which, when executed by a computer in or in communication with an acoustic flow cytometry apparatus, control the apparatus to: (1) flow a sample fluid including particles into a channel; (2) acoustically focus at least some of the particles in the sample fluid in a first region contained within the channel by applying acoustic radiation pressure to the first region; (3) hydrodynamically focus the sample fluid including the at least some acoustically focused particles by flowing a sheath fluid around the sample fluid in a second region downstream of the first region; (4) adjust a volumetric ratio of the sheath fluid to the sample fluid to maintain a substantially constant overall particle velocity in an interrogation zone in or downstream of the second region; (5) analyze at least some of the acoustically and hydrodynamically focused particles in the interrogation zone; and (6) detect one or more rare events based on at least one signal detected at the interrogation zone, the one or more rare events being selected from the group consisting of one or more rare fluorescence events, one or more rare cell types, and one or more dead cells.

In accordance with the present disclosure, there is provided an apparatus including (1) a capillary including a channel; (2) at least one vibration source coupled to the capillary, the at least one vibration source being configured to apply vibration to the channel; and (3) an interrogation source including a 405 nm laser, the interrogation source being configured to have an output that interacts with one or more particles flowing in the capillary. The interrogation source may further include a 488 nm laser. The vibration source may include a piezoelectric material. The vibration source may be configured to produce an acoustic signal inducing acoustic radiation pressure within the channel, which may concentrate a plurality of selected particles within a fluid sample stream in the channel, and the capillary may include a sheath flow channel to hydrodynamically concentrate the selected particles within the fluid sample stream.

In accordance with the present disclosure, there is provided a system including (1) a capillary having a channel; (2) at least one vibration producing transducer coupled to the capillary, the at least one vibration producing transducer being configured to produce an acoustic signal inducing acoustic radiation pressure within the channel, wherein the acoustic radiation pressure concentrates a plurality of selected particles within a fluid sample stream in the channel; (3) an interrogation source including a 405 nm laser, the interrogation source being configured to have an output that interacts with at least some of the selected particles to produce an output signal; (4) an optical module to collect the output signal from the interrogation source; (5) a detector module to detect the output signal of the optical module; and (6) a data acquisition module to process an output of the detector module. The vibration producing transducer may include a piezoelectric device. The interrogation source may further include a 488 nm laser, and both the 405 nm laser and the 488 nm laser may interrogate at least some of the selected particles. The capillary may include at least one sheath flow channel, and the sheath flow channel may include a sheath fluid to hydrodynamically concentrate the selected particles within the fluid sample stream. The system may include a processor configured to control at least one of the vibration producing transducer, the detector module, and the data acquisition module. It may also include a blocker bar between the capillary and the optical module, and the blocker bar may be attached to a substantially cylindrical peg, which may be rotatable to position the blocker bar and adjust an output aperture of the output signal of the interrogation source. The output aperture of the output signal of the interrogation source may be about 19°. The optical module may include a collection lens to collect the output signal from the interrogation source, and an output of the collection lens may be split into two beams with a spatial filtering pinhole device, wherein a first beam is output from the 405 nm laser and a second beam is output from the 488 nm laser. The detector module may include detectors to detect a forward scatter signal and a side scatter signal from the first beam output by the 405 nm laser.

In accordance with the present disclosure, there is provided a flow cytometry system including (1) a first pump configured to flow a sample fluid including particles in a first channel in a capillary; (2) a piezoelectric device configured to produce acoustic radiation pressure in a planar direction to acoustically focus the particles in the first channel; (3) a second pump configured to flow a sheath fluid in a second planar direction in a second channel in the capillary to hydrodynamically focus the particles in the second planar direction and further focus the particles; (4) an interrogation source, wherein an output of the interrogation source outputs a first light beam from a 405 nm laser and a second light beam from a 488 nm laser, and wherein the first and the second light beams interact with at least some of the particles flowing in the capillary to produce an output signal; (5) an optical module configured to collect the output signal from the interrogation source; (6) a detector module configured to detect an output signal of the optical module; and (7) a data acquisition module configured to process an output of the detector module.

In accordance with the present disclosure, there is provided a method for detecting a rare event using a flow cytometer including (1) flowing a sample including particles in a flow channel at a flow rate between about 25 µl per minute to about 1000 µl per minute; (2) acoustically focusing at least some of the particles in the sample in a first region contained within the flow channel; (3) hydrodynamically focusing the sample including the at least some acoustically focused particles in a second region downstream of the first region; and (4) detecting a rare event based on at least one signal detected at an interrogation zone through which at least some of the acoustically and hydrodynamically focused particles are allowed to flow. And it may include detecting a rare fluorescence event, detecting one or more cells of a rare cell type, and/or detecting one or more dead cells.

In accordance with the present disclosure, there is provided a computer readable medium including computer readable instructions, which, when executed by a computer in or in communication with an acoustic flow cytometry apparatus, control the apparatus to: (1) flow a sample including particles in a flow channel at a flow rate between about 25 µl per minute to about 1000 µl per minute; (2) acoustically focus at least some of the particles in the sample in a first region contained within the flow channel; (3) hydrodynamically focus the sample including the at least some acoustically focused particles in a second region downstream of the first region; and (4) detect a rare event based on at least one signal detected at an interrogation zone through which at least some of the acoustically and hydrodynamically focused particles are allowed to flow. And it may control the apparatus to detect a rare fluorescence event, detect one or more cells of a rare cell type, and/or detect one or more dead cells.

According to the present disclosure, there is provided a method for flow cytometry, including (1) flowing a sample fluid including particles into a fluid channel; (2) acoustically focusing the particles in a first region of the fluid channel; (3) flowing a sheath fluid into a second region of the fluid channel downstream of the first region to hydrodynamically further focus the acoustically focused particles; (4) adjusting the volumetric ratio of sample fluid to sheath fluid to maintain a substantially constant overall particle velocity in the second region; and (5) analyzing the particles in the second region.

In accordance with the present disclosure, there is provided a computer readable medium including computer readable instructions, which, when executed by a computer in or in communication with an acoustic flow cytometry apparatus, control the apparatus to: (1) flow a sample fluid including particles into a fluid channel; (2) acoustically focus the particles in a first region of the fluid channel; (3) flow a sheath fluid into a second region of the fluid channel downstream of the first region to hydrodynamically further focus the acoustically focused particles; (4) adjust the volumetric ratio of sample fluid to sheath fluid to maintain a substantially constant overall particle velocity in the second region; and (5) analyze the particles in the second region.

Examples of rare events or rare event particles that may be present or detected in or using one or more of the above exemplary embodiments of the present invention include stem cells (any type), minimal residual disease cells, tetramers, NKT cells, fetomatemal hemorrhage cells, dead cells, cells with rare fluorescent signatures, etc., and more generally may include any identified particle or cell or population of particles or cells having certain identified characteristics that would be expected to be present only in a small fraction of the total particles or cells in the sample. The applicable fraction will, of course, depend on the particular cells or particles for a given problem or application. For example, a rare identified population could represent particles or cells representing about 5% of the total number of particles or cells, or about 2.5%, or about 1%, or about 0.1%, or about 0.05%, or about 0.01%. These values are exemplary only and other values between any two of them are also possible, as are also smaller values.

Examples of assaying suitable for use in or with one or more of the above exemplary embodiments of the present invention include antigen or ligand density measurement, apoptosis analysis, cell cycle studies, cell proliferation assaying, cell sorting, chromosome analysis, DNA/R A content analysis, drug uptake and efflux assaying, enzyme activity assaying, fluorescent protein detection, gene expression or transfection assaying, immunophenotyping, membrane potential analysis, metabolic studies, multiplex bead analysis, nuclear staining detection, reticulocyte and platelet analysis, stem cell analysis, and viability and cytotoxicity assaying.

Examples of media formulations suitable for use in or with one or more of the above exemplary embodiments of the present invention include amidotrizoate; cesium chloride with a non-ionic surfactant such as Pluronic® F68; compounds that contribute to high viscosity (e.g., glycerol, dextran, nanosilica coated with polyvinylpyrrolidone) in some applications; diatrizoate; glycerol; heavy salts such as cesium chloride or potassium bromide; iodinated compounds; iodixanol; iopamidol; ioxaglate; metrizamide; metrizoate; nanoparticulate material such as polymer coated silica; Nycodenz®; polydextran; polysucrose; saline buffer; saline buffered with protein, detergents, or other additives; salts and proteins combined with additives used to increase specific gravity without undue increase in salinity; and sucrose.

Examples of probes suitable for use in or with one or more of the above exemplary embodiments of the present invention include dyes including BFP, bioluminescent and/or chemiluminescent substances, C-dots, Ca2+/aequorin, dye-loaded nanospheres, phycoerythrin and fluorescein, fluorescein/terbium complex used in conjunction with plain fluorescein, fluorescent proteins, labels with extinction coefficient less than 25,000 cm M (e.g., Alexa Fluor® 405 and 430, APC-C7) and/or quantum efficiency less than 25% (e.g., ruthenium, Cy3), lanthanides, lanthanide chelates (especially those using europium and terbium), lanthanide tandem dyes, LRET probes, luciferin/luciferase, metal-ligand complexes, microbe-specific probes, naturally occurring fluorescent species such as NAD(P)H, nucleic acid probes, phosphors, photobleach-susceptible or triplet state prone dyes (e.g., blue fluorescent protein), phycoerythrin tandem dyes, probes prone to non-radiative state excitation (e.g., Rhodamine Atto532 and GFP), probes resistant to photobleaching at laser power exceeding about 50,000/cm2, probes with lifetimes greater than 10 nanoseconds, Qdot® products, Qdot® tandem probes, Raman scattering probes, semiconductor nanocrystals, tandem probes, terbium complexes, terbium fluorescein complex, and up-converting phosphors.

Examples of secondary reagents suitable for use in or with one or more of the above exemplary embodiments of the present invention include secondary reagents using ligands such as biotin, protein A and G, secondary antibodies, streptavidin, violet excited dyes conjugated to antibodies or other ligands (including violet excited secondary conjugates such as Pacific Blue™ or Pacific Orange™ conjugated to streptavidin/biotin or protein A/G), and Qdot® products or semiconductor nanocrystals used in a secondary format (e.g., as streptavidin conjugates).

One or more of the various exemplary embodiments of the present invention described above may be used with many types of environmental and industrial samples (especially when particles of interest are rare and normally require significant concentrations). For example, they may be used to process or analyze microbes from municipal waters, specific nucleic acid probes and other microbe specific probes, similar microbe testing in various food products including juice, milk, beer, mouthwash, etc.; to separate environmental and industrial analytes from reagents such as staining probes; to analyze the shape and size of particles where important in certain industrial processes such as ink production for copiers and printers and quality control in chocolate making; to concentrate and/or remove particles from waste streams or feed streams; to extend the life of certain filters; to remove metal, ceramic, or other particulates from machining fluids or particulates from spent oils such as motor oils and cooking oils, etc.

Any of the methods above can be automated with a processor and a database. A computer readable medium containing instructions may cause a program in a data processing medium (e.g., a computing system) to perform any one or more steps described in the above exemplary embodiments.

The preceding exemplary embodiments may be repeated with similar success by adding or substituting the generically or specifically described components and/or substances and/or steps and/or operating conditions described above in the preceding exemplary embodiments. Although the invention has been described in detail with particular reference to the above exemplary embodiments, other embodiments are also possible and within the scope of the present invention. Variations and modifications of the present invention will be apparent to those skilled in the art from consideration of the specification and figures and practice of the invention described in the specification and figures.

## Claims

1. A flow cytometer (3000), comprising:
a capillary (3006, 3206) comprising a sample channel;
at least one vibration producing transducer (3008, 3208) coupled to the capillary, the at least one vibration producing transducer (3008, 3208) being configured to produce an acoustic signal inducing acoustic radiation pressure within the sample channel to acoustically concentrate particles flowing within a fluid sample stream in the sample channel; and
an interrogation source (3010) comprising a laser, the laser being configured to interact with at least some of the acoustically concentrated particles to produce an output signal,
wherein the capillary (3206) further comprises a sheath flow channel configured to flow a sheath fluid (3205) around the fluid sample stream downstream of the acoustic concentration of the particles by the acoustic radiation pressure to hydrodynamically concentrate the acoustically concentrated particles within the fluid sample stream, and
comprising a first pump (3102) configured to flow a fluid sample comprising particles in the sample channel in the capillary and a second pump (3124) configured to flow a sheath fluid in the sheath flow channel at a volumetric ratio between the sheath fluid and the sample fluid between 50 to 1 and 30 to 1, in the capillary, the first and second pumps being configured to maintain a total input rate of sample fluid and sheath fluid flowing in the capillary constant to ensure that an interrogation time of the at least some of the acoustically concentrated particles through the laser remains constant regardless of the sample fluid input rate.

2. The flow cytometer (3000) of claim 1, wherein the at least one vibration producing transducer (701) comprises a piezoelectric device, wherein the interrogation source comprises a blue laser and a violet laser, the violet laser has a wavelength of about 405 nanometers, and the blue laser has a wavelength of about 488 nanometers.

3. The flow cytometer (3000) of claim 1, comprising:
an optical module to collect the output signal from the interrogation source;
a detector module to detect an output signal of the optical module; and
a data acquisition module to process an output of the detector module.

4. The flow cytometer (3000) of claim 3, comprising a processor configured to control at least one of the at least one vibration producing transducer, the detector module, and the data acquisition module.

5. The flow cytometer (3000) of claim 3, comprising a blocker bar between the capillary and the optical module.

6. The flow cytometer (3000) of claim 5, wherein the blocker bar is attached to a substantially cylindrical peg that is rotatable to position the blocker bar and adjust an output aperture of the output signal of the interrogation source.

7. The flow cytometer (3000) of claim 6, wherein the output aperture of the output signal of the interrogation source is between about 17 degrees and about 21 degrees.

8. The flow cytometer (3000) of claim 3, wherein the optical module comprises a collection lens to collect the output signal from the interrogation source, and wherein an output of the collection lens is split into two beams with a spatial filtering pinhole device, wherein a first beam is output from the violet laser and a second beam is output from the blue laser.

9. The flow cytometer (3000) of claim 8, wherein the detector module comprises detectors to detect a forward scatter signal and a side scatter signal from the first beam output by the violet laser.

10. A method for detecting a rare event using a flow cytometer (3000), comprising:
flowing a sample fluid including particles into a channel;
acoustically focusing at least some of the particles in the sample fluid in a first region contained within the channel by applying acoustic radiation pressure to the first region;
hydrodynamically focusing the sample fluid comprising the at least some acoustically focused particles by flowing a sheath fluid (3205) around the sample fluid in a second region downstream of the first region;
adjusting a volumetric ratio of the sheath fluid to the sample fluid to maintain a substantially constant overall particle velocity in an interrogation zone downstream of the second region;
analyzing at least some of the acoustically and hydrodynamically focused particles in the interrogation zone; and
detecting one or more rare events based on at least one signal detected at the interrogation zone, the one or more rare events being selected from the group consisting of one or more rare fluorescence events, one or more rare cell types, and one or more dead cells, comprising flowing the sample fluid at and the sheath fluid at a volumetric ratio between the sheath fluid and the sample fluid of between 50 to 1 and 30 to 1.

11. The method of claim 10, comprising ensuring that a transit time of the acoustically and hydrodynamically focused particles through the interrogation zone exceeds about 20 microseconds.

12. The method of claim 10, comprising ensuring that a transit time of the acoustically and hydrodynamically focused particles through the interrogation zone exceeds about 40 microseconds.

## Patentansprüche

1. Durchflusszytometer (3000), Folgendes umfassend:
eine Kapillare (3006, 3206) mit einem Probenkanal;
mindestens einen schwingungserzeugenden Wandler (3008, 3208), der mit der Kapillare gekoppelt ist, wobei der mindestens eine schwingungserzeugende Wandler (3008, 3208) dazu konfiguriert ist, ein akustisches Signal zu erzeugen, das einen Schallstrahlungsdruck innerhalb des Probenkanals induziert, um Partikel, die innerhalb eines Fluidprobenstroms in dem Probenkanal fließen, akustisch zu konzentrieren; und
eine Abfragequelle (3010), die einen Laser umfasst, wobei der Laser dazu konfiguriert ist, um mit mindestens einigen der akustisch konzentrierten Partikel zu interagieren, um ein Ausgangssignal zu erzeugen,
wobei die Kapillare (3206) ferner einen Mantelstromkanal umfasst, der dazu konfiguriert ist, der durch Schallstrahlungsdruck akustischen Konzentration der Partikel nachgeschaltet ein Mantelfluid (3205) um den Fluidprobenstrom herum fließen zu lassen, um die akustisch konzentrierten Partikel innerhalb des Fluidprobenstroms hydrodynamisch zu konzentrieren,
und eine erste Pumpe (3102) umfasst, die dazu konfiguriert ist, um eine Partikel umfassende Fluidprobe in dem Probenkanal in der Kapillare fließen zu lassen, und eine zweite Pumpe (3124), die dazu konfiguriert ist, um ein Mantelfluid in dem Mantelstromkanal mit einem Volumenverhältnis zwischen dem Mantelfluid und dem Probenfluid zwischen 50 zu 1 und 30 zu 1 in der Kapillare fließen zu lassen, wobei die erste und zweite Pumpe dazu konfiguriert sind, um eine Gesamteinleitungsrate von Probenfluid und Mantelfluid, die in der Kapillare fließen, konstant zu halten, um zu gewährleisten, dass eine Abfragezeit der mindestens einigen der akustisch konzentrierten Partikel durch den Laser unabhängig von der Probenfluideinleitungsrate konstant bleibt.

2. Durchflusszytometer (3000) nach Anspruch 1, wobei der mindestens eine schwingungserzeugende Wandler (701) eine piezoelektrische Vorrichtung umfasst, wobei die Abfragequelle einen blauen Laser und einen violetten Laser umfasst, der violette Laser eine Wellenlänge von etwa 405 Nanometern aufweist und der blaue Laser eine Wellenlänge von etwa 488 Nanometern aufweist.

3. Durchflusszytometer (3000) nach Anspruch 1, Folgendes umfassend:
ein optisches Modul zum Abnehmen des Ausgangssignals von der Abfragequelle;
ein Detektormodul zum Erkennen eines Ausgangssignals des optischen Moduls; und
ein Datenerfassungsmodul zum Verarbeiten einer Ausgabe des Detektormoduls.

4. Durchflusszytometer (3000) nach Anspruch 3, das einen Prozessor umfasst, der dazu konfiguriert ist, um mindestens eines aus dem mindestens einen schwingungserzeugenden Wandler, dem Detektormodul und dem Datenerfassungsmodul zu steuern.

5. Durchflusszytometer (3000) nach Anspruch 3, das eine Absperrleiste zwischen der Kapillare und dem optischen Modul umfasst.

6. Durchflusszytometer (3000) nach Anspruch 5, wobei die Absperrleiste an einem im Wesentlichen zylindrischen Zapfen angebracht ist, der drehbar ist, um die Absperrleiste zu positionieren und um eine Ausgabeöffnung des Ausgangssignals der Abfragequelle einzustellen.

7. Durchflusszytometer (3000) nach Anspruch 6, wobei die Ausgabeöffnung des Ausgangssignals der Abfragequelle zwischen etwa 17 Grad und etwa 21 Grad misst.

8. Durchflusszytometer (3000) nach Anspruch 3, wobei das optische Modul eine Sammellinse umfasst, um das Ausgangssignal von der Abfragequelle zu sammeln, und wobei eine Ausgabe der Sammellinse mit einer räumlich filternden Lochvorrichtung in zwei Strahlen aufgeteilt wird, wobei ein erster Strahl von dem violetten Laser ausgegeben wird und ein zweiter Strahl von dem blauen Laser ausgegeben wird.

9. Durchflusszytometer (3000) nach Anspruch 8, wobei das Detektormodul Detektoren umfasst, um ein Vorwärtsstreuungssignal und ein Seitenstreuungssignal von der ersten Strahlausgabe durch den violetten Laser zu erkennen.

10. Verfahren zum Erkennen eines seltenen Ereignisses unter Verwendung eines Durchflusszytometers (3000), Folgendes umfassend:
Einleiten eines Partikel enthaltenden Probenfluids in einen Kanal;
akustisches Fokussieren mindestens einiger der Partikel in dem Probenfluid in einem ersten Bereich, der innerhalb des Kanals enthalten ist, durch Anlegen eines Schallstrahlungsdrucks an den ersten Bereich;
hydrodynamisches Fokussieren des Probenfluids, das die mindestens einigen akustisch fokussierten Partikel umfasst, durch Fließenlassen eines Mantelfluids (3205) um das Probenfluid herum in einem dem ersten Bereich nachgeschalteten zweiten Bereich;
Einstellen eines Volumenverhältnisses des Mantelfluids zu dem Probenfluid, um eine im Wesentlichen konstante Gesamtpartikelgeschwindigkeit in einer dem zweiten Bereich nachgeschalteten Abfragezone aufrechtzuerhalten;
Analysieren mindestens einiger der akustisch und hydrodynamisch fokussierten Partikel in der Abfragezone; und
Erkennen eines oder mehrerer seltener Ereignisse basierend auf mindestens einem in der Abfragezone erkannten Signal, wobei das eine oder die mehreren seltenen Ereignisse ausgewählt sind aus der Gruppe bestehend aus einem oder mehreren seltenen Fluoreszenzereignissen, einem oder mehreren seltenen Zelltypen und einer oder mehreren toten Zellen, umfassend ein Fließenlassen des Probenfluids und des Mantelfluids mit einem Volumenverhältnis zwischen dem Mantelfluid und dem Probenfluid zwischen 50 zu 1 und 30 zu 1.

11. Verfahren nach Anspruch 10, das umfasst zu gewährleisten, dass eine Durchlaufzeit der akustisch und hydrodynamisch fokussierten Partikel durch die Abfragezone etwa 20 Mikrosekunden übersteigt.

12. Verfahren nach Anspruch 10, das umfasst zu gewährleisten, dass eine Durchlaufzeit der akustisch und hydrodynamisch fokussierten Partikel durch die Abfragezone etwa 40 Mikrosekunden übersteigt.

## Revendications

1. Cytomètre de flux (3000) comprenant :
un capillaire (3006, 3206) comprenant un canal d'échantillon ;
au moins un transducteur produisant des vibrations (3008, 3208) connecté au capillaire, l'au moins un transducteur produisant des vibrations (3008, 3208) étant configuré pour produire un signal acoustique induisant une pression de rayonnement acoustique dans le canal d'échantillon afin de concentrer de manière acoustique les particules s'écoulant dans un flux d'échantillon de fluide dans le canal d'échantillon ; et
une source d'interrogation (3010) comprenant un laser, le laser étant configuré pour interagir avec au moins une partie des particules concentrées de manière acoustique afin de produire un signal de sortie, le capillaire (3206) comprenant en outre un canal d'écoulement de gaine configuré pour faire circuler un fluide de gaine (3205) autour du flux d'échantillon de fluide en aval de la concentration acoustique des particules par la pression de rayonnement acoustique afin de concentrer de manière hydrodynamique les particules concentrées de manière acoustique dans le flux d'échantillon de fluide, et comprenant une première pompe (3102) configurée pour faire circuler un échantillon de fluide comprenant des particules dans le canal d'échantillon dans le capillaire, et une seconde pompe (3124) configurée pour faire circuler un fluide de gaine dans le canal d'écoulement de gaine selon un rapport volumétrique entre le fluide de gaine et le fluide échantillon compris entre 50 à 1 et 30 à 1, dans le capillaire, les première et seconde pompes étant configurées pour maintenir constant un débit total d'entrée de fluide d'échantillon et de fluide de gaine circulant dans le capillaire afin de garantir qu'un temps d'interrogation de l'au moins une partie des particules concentrées de manière acoustique à travers le laser reste constante quel que soit le débit d'entrée de fluide d'échantillon.

2. Cytomètre de flux (3000) selon la revendication 1, dans lequel l'au moins un transducteur produisant des vibrations (701) comprend un dispositif piézoélectrique, la source d'interrogation comprenant un laser bleu et un laser violet, le laser violet ayant une longueur d'onde d'environ 405 nanomètres, et le laser bleu ayant une longueur d'onde d'environ 488 nanomètres.

3. Cytomètre de flux (3000) selon la revendication 1, comprenant :
un module optique permettant de recueillir le signal de sortie provenant de la source d'interrogation ;
un module de détection permettant de détecter un signal de sortie du module optique ; et
un module d'acquisition de données permettant de traiter une sortie du module de détection.

4. Cytomètre de flux (3000) selon la revendication 3, comprenant un processeur configuré pour commander l'au moins un transducteur produisant des vibrations et/ou le module de détection et/ou le module d'acquisition de données.

5. Cytomètre de flux (3000) selon la revendication 3, comprenant une barre de blocage entre le capillaire et le module optique.

6. Cytomètre de flux (3000) selon la revendication 5, dans lequel la barre de blocage est fixée à une broche sensiblement cylindrique qui peut tourner pour positionner la barre de blocage et régler une ouverture de sortie du signal de sortie de la source d'interrogation.

7. Cytomètre de flux (3000) selon la revendication 6, dans lequel l'ouverture de sortie du signal de sortie de la source d'interrogation est comprise entre environ 17 degrés et environ 21 degrés.

8. Cytomètre de flux (3000) selon la revendication 3, dans lequel le module optique comprend une lentille collectrice permettant de recueillir le signal de sortie de la source d'interrogation, et dans lequel une sortie de la lentille collectrice est divisée en deux faisceaux avec un dispositif à trous d'épingle de filtrage spatial, un premier faisceau étant émis par le laser violet et un second faisceau étant émis par le laser bleu.

9. Cytomètre de flux (3000) selon la revendication 8, dans lequel le module de détection comprend des détecteurs permettant de détecter un signal de diffusion vers l'avant et un signal de diffusion latérale provenant du premier faisceau émis par le laser violet.

10. Procédé de détection d'un événement rare en utilisant un cytomètre de flux (3000), consistant à :
faire circuler un fluide d'échantillon comprenant des particules dans un canal ;
focaliser de manière acoustique au moins une partie des particules dans le fluide d'échantillon dans une première région contenue dans le canal en appliquant une pression de rayonnement acoustique sur la première région ;
focaliser de manière hydrodynamique l'échantillon de fluide comprenant au moins certaines particules focalisées de manière acoustique en faisant circuler un fluide de gaine (3205) autour du fluide d'échantillon dans une seconde région en aval de la première région ;
régler un rapport volumétrique du fluide de gaine au fluide d'échantillon afin de maintenir une vitesse de particule globale sensiblement constante dans une zone d'interrogation en aval de la seconde région ;
analyser au moins une partie des particules focalisées de manière acoustique et hydrodynamique dans la zone d'interrogation ; et à
détecter un ou plusieurs événements rares sur la base d'au moins un signal détecté dans la zone d'interrogation, le ou les événements rares étant sélectionnés dans le groupe constitué par un ou plusieurs événements de fluorescence rares, un ou plusieurs types de cellules rares et une ou plusieurs cellules mortes, le procédé consistant à faire circuler le fluide d'échantillon et le fluide de gaine selon un rapport volumétrique entre le fluide de gaine et le fluide d'échantillon compris entre 50 à 1 et 30 à 1.

11. Procédé selon la revendication 10, consistant à s'assurer qu'un temps de transit des particules focalisées de manière acoustique et hydrodynamique à travers la zone d'interrogation dépasse environ 20 microsecondes.

12. Procédé selon la revendication 10, consistant à s'assurer qu'un temps de transit des particules focalisées de manière acoustique et hydrodynamique à travers la zone d'interrogation dépasse environ 40 microsecondes.
